(19) Europäisches Patentamt
European Patent Office
Office européen des brevets

(11) EP 4 685 198 A1

(12) **EUROPEAN PATENT APPLICATION**
published in accordance with Art. 153(4) EPC

(43) Date of publication:
**28.01.2026 Bulletin 2026/05**

(21) Application number: **24774739.7**

(22) Date of filing: **11.03.2024**

(51) International Patent Classification (IPC):
***C09D 11/322*** *(2014.01)* ***B41J 2/01*** *(2006.01)*
***B41J 2/21*** *(2006.01)* ***B41M 5/00*** *(2006.01)*
***C09D 11/38*** *(2014.01)* ***C09D 11/40*** *(2014.01)*
***C09D 11/54*** *(2014.01)*

(52) Cooperative Patent Classification (CPC):
**B41J 2/01; B41J 2/21; B41M 5/00; C09D 11/322; C09D 11/38; C09D 11/40; C09D 11/54**

(86) International application number:
**PCT/JP2024/009259**

(87) International publication number:
**WO 2024/195600 (26.09.2024 Gazette 2024/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.03.2023 JP 2023044297**

(71) Applicant: **KONICA MINOLTA, INC.**
**Tokyo 100-7015 (JP)**

(72) Inventors:
- **TAGUCHI, Ryo**
  **Tokyo 100-7015 (JP)**
- **NIIZUMA, Naoto**
  **Tokyo 100-7015 (JP)**

(74) Representative: **Gille Hrabal Partnerschaftsgesellschaft mbB Patentanwälte**
**Brucknerstraße 20**
**40593 Düsseldorf (DE)**

(54) **INK SET, INKJET RECORDING METHOD, AND INKJET RECORDING SYSTEM**

(57) The ink set of the present invention comprises a first ink containing a flocculant, a second ink containing a white pigment and a resin emulsion, and a third ink containing a colored pigment. The second ink is gelled by mixing with the first ink.

FIG.2

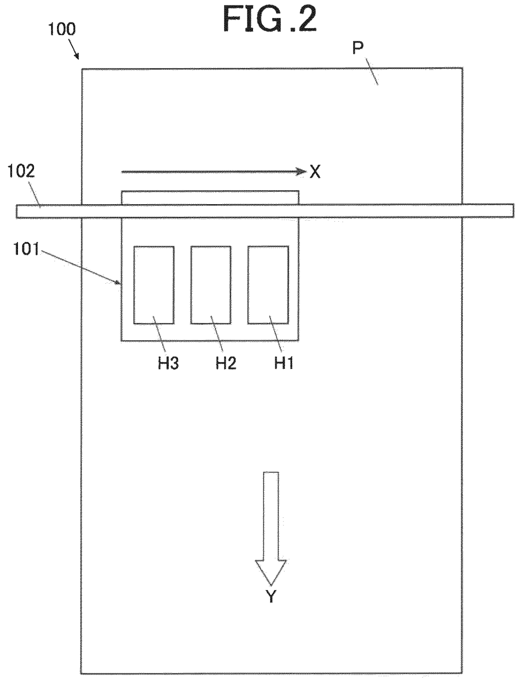


EP 4 685 198 A1

## Description

### Technical Field

The present invention relates to an ink set, an inkjet recording method, and an inkjet recording system. In particular, the present invention relates to an ink set or the like in which a drying step is not provided between a step of printing a white ink and a step of printing a color ink and suppressing sinking of the color ink in a base layer.

### Background Art

Inkjet printing for printing in color on an absorbent base material typified by paper and cloth has become widespread and is still actively used.

In recent years, inkjet ink for printing not only on absorbent base materials but also on non-absorbent base materials and low-absorbent base materials has been developed as a target. Examples of the non-absorbent base material and the low-absorbent base material include plastic films, metals, and leathers.

It is known that image quality deteriorates in an inkjet recording method using a non-absorbent base material or a low-absorbency base material. The reasons why the image quality is degraded are a liquid shift phenomenon in which landed ink droplets coalesce with each other on a recording medium and color bleeding in which bleeding occurs between different colors.

As a means for solving the deterioration of the image quality, there is a two liquid type inkjet recording method described in Patent Document 1. Patent Document 1 discloses a two liquid inkjet recording method in which a treatment liquid for aggregation of a color material in ink is ejected to merge the treatment liquid and the ink on the recording medium (e.g., refer to Patent Document 1). According to this inkjet recording method, the ink can be satisfactorily fixed to the recording medium without degrading image quality.

Further, in the case of a recording medium whose base color is not necessarily white, in order to provide a vivid color printed material, means for forming a white base layer and then forming a color image is adopted.

However, the method using the treatment liquid for aggregation of the color material cannot prevent the color ink from sinking in the previously printed white underlayer, resulting in insufficient color development of the color image.

As a measure for preventing the color ink from sinking into the white layer, Patent Document 2 discloses a method in which a drying step is provided between a step of attaching the white ink and a step of attaching the color ink so that the white ink is brought into a semi-dried state, and then the color ink is printed.

Furthermore, in order to improve productivity, the following methods are available.

Each of Patent Document 3 and Patent Document 4 discloses a method in which a drying step is not provided between a step of attaching the white ink and a step of attaching the color ink, and adhesion amount of the white ink is made smaller than the adhesion amount of the color ink.

Patent Document 5 and Patent Document 6 disclose a method in which the color ink is adhered with a certain time interval after adhesion of the white ink.

However, in the case of the techniques disclosed in Patent Document 3 and Patent Document 4, it is necessary to limit an ejection amount of the white ink. Therefore, complication of a device is a problem.

The techniques disclosed in Patent Document 5 and Patent Document 6 require a step of drying the white ink. Examples of a step of drying the white ink include heat drying and natural drying. Therefore, productivity is a problem.

### Citation List

#### Patent Literature

Patent Document 1:Japanese Unexamined Patent Publication No. H 8-52867
Patent Document 2:Japanese Unexamined Patent Publication No. 2010-158884
Patent Document 3:Japanese Unexamined Patent Publication No. 2022-104220
Patent Document 4:Japanese Unexamined Patent Publication No. 2022-101991
Patent Document 5:Japanese Unexamined Patent Publication No. 2022-49649
Patent Document 6:Japanese Unexamined Patent Publication No. 2022-40645

### Summary of Invention

Technical Problem

The present invention has been made in consideration of the above-mentioned problems and situations. A problem to be solved by the present invention is to provide an ink set or the like that suppresses ink from sinking in an underlayer and does not require a drying step between a step of printing white ink and a step of printing color ink.

Solution to Problem

In order to solve the above-described problem, the present inventor has found an importance of the following in a process of examining a cause and the like of the above-described problem. A first ink containing an aggregating agent and a second ink containing a white pigment and a resin emulsion are mixed to be gelled. Thereafter, a third ink containing a color pigment is applied onto the gelled coating film.

That is, the above problem according to the present invention is solved by the following means.

1. An ink set comprising:

   a first ink containing an aggregating agent;
   a second ink containing a white pigment and a resin emulsion; and
   a third ink containing a color pigment,
   wherein the second ink is gelled by being mixed with the first ink.

2. The ink set according to claim 1, wherein the first ink and the second ink are mixed at a mass ratio of 1:4, and a jelly strength at 25°C is within a range of 3.0 to 20.0 mN.
3. The ink set according to claim 1, wherein the aggregating agent is a polyvalent metal salt.
4. The ink set according to claim 1, wherein,

   the second ink contains a water-soluble solvent, and
   a percentage of the water-soluble solvent is within a range of 10 to 35% by mass when a total mass of the second ink is 100% by mass.

5. The ink set according to claim 1, wherein,

   the second ink contains a water-soluble solvent and a surfactant, and
   a static surface tension of the water-soluble solvent including the surfactant is 25 mN/m or less at 25°C.

6. The ink set according to claim 1, wherein an average particle diameter of a particle in the resin emulsion is in a range of 80 to 200 nm.
7. An inkjet recording method comprising:

   a first step in which a first ink is applied to a recording medium;
   a second step in which a second ink is applied; and
   a third step in which a third ink is applied,
   wherein,
   an image is formed by applying and coalescing the first to third ink on a surface of the recording medium through the first to third steps,
   drying is not performed between the first step and the second step, and between the second step and the third step, and
   the second ink and the first ink gels when mixed together.

8. The inkjet recording method according to claim 7, wherein an attached amount of the first ink for each unit area on the recording medium is within a range of 1.1 $g/m^2$ to 3.4 $g/m^2$.
9. An inkjet recording system comprising:

   the ink set according to any one of claims 1 to 6;
   a first application means for applying a first ink to a recording medium;
   a second application means for applying a second ink; and
   a third application means for applying a third ink,
   wherein,

an image is formed by applying and coalescing the first to third ink on a surface of the recording medium by the first to third application means,
drying is not performed between the first application means and the second application means, and between the second application means and the third application means, and
the second ink and the first ink gels when mixed together.

Advantageous Effects of Invention

By the above-described means of the present invention, it is possible to provide an ink set, an inkjet recording method, and an inkjet recording system in which sinking of color ink into an underlayer is suppressed, and it is not necessary to provide a drying step between the step of printing white ink and the step of printing color ink.
Although the realization mechanism or action mechanism of the effects of the present invention is not clear, the present inventor infers the mechanism as follows.
According to the present invention, a first ink contains an aggregating agent, a second ink contains a white pigment and a resin emulsion, and the second ink is gelled by being mixed with the first ink. Therefore, applying a third ink onto the gelled coating film can prevent the third ink from sinking. As a result, it is not necessary to provide a drying step between the step of printing with the first and second ink and the step of printing with the third ink. Therefore, the size of the apparatus can be reduced, and excellent productivity is achieved.

Brief Description of Drawings

[FIG. 1] This is a schematic diagram of an inkjet recording apparatus according to the present invention.
[FIG. 2] This is a schematic diagram of an inkjet recording apparatus according to the present invention.

Description of Embodiments

An ink set of the present invention includes a first ink containing an aggregating agent, a second ink containing a white pigment and a resin emulsion, and a third ink containing a color pigment, wherein the second ink is gelated by mixing with the first ink.
The above-described features are technical features common to or corresponding to the following embodiment.
According to an embodiment of the present invention, when the first ink and the second ink are mixed at a mass ratio of 1:4, a jelly strength at 25°C is preferably in a range of 3.0 to 20.0 mN. Thus, the first ink and the second ink are surely gelated when mixed. Therefore, even when the third ink is applied onto the gelled coating film, the third ink can be prevented from sinking.
It is preferable that the aggregating agent is a polyvalent metal salt in terms of image quality.
It is preferable that the second ink contains a water-soluble solvent, and when the total mass of the second ink is defined as 100% by mass, the proportion of the water-soluble solvent is within a range of 10 to 35% by mass. When the proportion of the water-soluble solvent is 10% by mass or more, the ejection property is not influenced, and when the proportion of the water-soluble solvent is 35% by mass or less, drying crack of the coating film can be suppressed.
It is preferable that the second ink contains the water-soluble solvent and a surfactant, and the water-soluble solvent containing the surfactant has a static surface tension of 25 mN/m or less at 25°C. Thus, an effective surfactant is used for the water-soluble solvent in the second ink, and drying cracking of the coating film can be suppressed.
When the average particle diameter of the particles in the resin emulsion is within a range of 80 to 200 nm, the ejection property is not influenced, and the drying crack of the coating film does not occur.
An inkjet recording method according to the present invention includes a first step of applying a first ink, a second step of applying a second ink, and a third step of applying a third ink to a recording medium, wherein the first to third steps form an image by applying the first to third inks to a surface of the recording medium and coalescing the inks, and between the first step and the second step and between the second step and the third step, gelation occurs when the second ink and the first ink are mixed without performing the drying step.
Thus, since the first ink and the second ink are gelled when mixed, it is not necessary to perform a drying process, it is possible to reduce the size of the apparatus, and it is excellent in productivity.
The attached amount of the first ink for each unit area on the recording medium preferably fall within the range of 1.1 $g/m^2$ to 3.4 $g/m^2$, respectively, in that high-quality images can be obtained. When the attached amount is 1.1 $g/m^2$ or more, the image quality of the third ink becomes satisfactory. When the attached amount is 3.4 $g/m^2$ or less, homogeneity of the second ink becomes satisfactory.
An inkjet recording system of the present invention includes the above-described ink set of the present invention,

a first application means for applying a first ink to the recording medium, a second application means for applying a second ink, and a third application means for applying a third ink, wherein the first to third application means apply the first to third inks to a surface of the recording medium, and the first to third inks are combined to form an image, and between the first application means and the second application means, between the second application means and the third application means, without drying, gelation occurs when the second ink and the first ink are mixed.

Thus, since the first ink and the second ink are gelled when mixed, it is not necessary to perform a drying process, it is possible to reduce the size of the apparatus, and it is excellent in productivity.

Hereinafter, the present invention, constituent element of the present invention, and embodiments and modes for carrying out the present invention will be described. In the present description, "to" between two numerical values is used to indicate a range of values including the two numerical values as a lower limit value and an upper limit value.

1. Ink Set

An ink set of the present invention includes a first ink containing an aggregating agent, a second ink containing a white pigment and a resin emulsion, and a third ink containing a color pigment, wherein the second ink is gelated by mixing with the first ink.

In the present invention, the term "gelling" refers to a phenomenon in which a sol becomes a gel, that is, a phenomenon of changing from a liquid state to a jelly state and solidifying. Specifically, it refers to a state where the first ink and the second ink are mixed at a mass ratio of 1:4 in a container, and the ink does not drop from the container when the container is turned upside down.

In the present invention, when the first ink and the second ink are mixed at a mass ratio of 1:4, the jelly strength at 25°C is preferably within a range of 3.0 to 20.0 mN.

The jelly strength in the present invention is calculated as follows.

The first ink and the second ink were added to a screw tube of 6 cc at a mass ratio of 1:4 in the order of the first ink and the second ink, and stirred for 10 minutes. After the stirring, a load required for an intrusion distance of 4 mm at an intrusion rate of 0.5 mm per second was defined as jelly strength using a rheometer (EZ-Test, manufactured by Shimadzu Corporation) equipped with a spherical plunger having a diameter of 7 mm.

[First Ink]

The first ink according to the present invention contains an aggregating agent. The first ink is an ink to be mixed in a liquid state with a second ink described later on the recording medium.

Here, the phrase "mixed in a liquid state" means that, for example, the first ink and the second ink are mixed in a liquid state to form one liquid material.

The term "liquid state" refers to a liquid state having a drying rate (also referred to as a "volatilization rate" or an "evaporation rate") of 30% or less of a solvent, a dispersion medium, or the like contained in the first ink, the second ink, and the third ink.

The first ink may contain a solvent, a surfactant, water, and other components in addition to the aggregating agent.

< Aggregating Agent >

The aggregating agent is not particularly limited as long as it is a material which generates an aggregation when coming into contact with the ink. Examples of the aggregating agent include polyvalent metal salt, organic acids, inorganic acids, and cationic polymers. When the first ink contains these aggregating agents, the interaction with the second ink, which is a color material-containing ink, can be increased.

(Polyvalent Metal Salt)

When the first ink contains the polyvalent metal salt as the aggregating agent, anionic components in the second ink mixed with the first ink undergo aggregation on the recording medium through salting-out.

As the polyvalent metal salt, a salt of a metal having a valence of two or more can be used.

The kinds of metals (cations) constituting the polyvalent metal salt are not particularly limited, and examples thereof include divalent metallic ions such as $Ca^{2+}$, $Cu^{2+}$, $Ni^{2+}$, $Mg^{2+}$, $Zn^{2+}$, $Ba^{2+}$, trivalent metallic ions such as $Al^{3+}$, $Fe^{3+}$, $Cr^{3+}$, $Y^{3+}$, and tetravalent metallic ions such as $Zr^{4+}$.

The type of the salt forming the polyvalent metal salt is not particularly limited, and for example, known salts such as carbonates, sulfates, nitrates, hydrochlorides, organic acid salts, borates, and phosphates can be used.

Specific examples of particularly preferable polyvalent metal salts include calcium salts and magnesium salts of

carboxylic acids such as calcium chloride and magnesium chloride, calcium nitrate and magnesium nitrate, magnesium acetate, calcium acetate and magnesium lactate, and calcium pantothenate.

The content of the polyvalent metal salt is preferably in a range of 0.5% by mass to 20% by mass and more preferably in a range of 1% by mass to 10% by mass relative to 100% by mass of the total mass of the first ink.

According to this, the anionic component in the second ink can be effectively subjected to aggregation, and the balance between image quality and hot water resistance can be adjusted.

The content of a polyvalent metal salt in an aqueous solution can be measured by a known method, and examples thereof include inductively coupled plasma (ICP) emission spectrometry.

(Organic Acid)

The organic acid is capable of aggregation of the pigment that may be contained in the second ink.

When the organic acid is contained in the first ink as the aggregating agent, an anionic component in the second ink can be aggregated by a pH change.

Examples of the organic acid include malonic acid, formic acid, acetic acid, propionic acid, isobutyric acid, and benzoic acid.

The organic acid is preferably not completely neutralized with a base.

By "neutralization with a base" is meant that an acidic group of these acids are ionically bonded with other positively charged elements or compounds (e.g., inorganic compounds such as metals).

Furthermore, the expression "not completely neutralized" means the presence of an acidic group that does not form the above-described ionic bond among the acidic groups of the organic acid.

Furthermore, use of the organic acid facilitates maintenance of storage stability of the first ink and reduces the likelihood of blocking occurring after the first ink is applied and dried.

From the above viewpoint, preferable organic acids include malonic acid, formic acid, acetic acid, propionic acid, and benzoic acid.

In the case of containing an organic acid, the content of the organic acid is preferably in the range of 0.1 to 10% by mass and more preferably in the range of 1 to 3% by mass relative to 100% by mass of the total mass of the first ink.

Note that when an organic acid is used, the amount of the organic acid added is preferably an amount that adjusts the pH of the first ink to a neutralization equivalent or less of the anion component contained in the second ink.

Furthermore, in a case where the anion component is a compound having a carboxy group, the first dissociation constant of the organic acid is preferably 3.5 or less from the standpoint that image bleeding is less likely to occur.

The content of the organic acid in the aqueous solution can be measured by a known method, such as high-performance liquid chromatography (HPLC).

(Inorganic Acid)

The inorganic acid is capable of aggregation of the pigment that may be contained in the second ink.

The inorganic acid can cause aggregation of anionic components in the color material-containing ink by a pH change.

Examples of the inorganic acid include hydrochloric acid, nitric acid, sulfuric acid, and sulfamic acid.

When the inorganic acid is contained, the content of the inorganic acid is preferably in the range of 0.1 to 10% by mass and more preferably in the range of 1 to 3% by mass relative to 100% by mass of the total mass of the first ink.

(Cationic Polymer)

Examples of the cationic polymer used as the aggregating agent include a soluble polymer.

Examples of the soluble polymer include polyallylamine, polyvinylamine, polyethyleneimine, and polydiallyldimethylammonium chloride.

Examples of commercially available products of the soluble cationic polymer include KHE100L and FPA100L manufactured by Senka Corporation, and PAS-92A, PAS-M-1A, and PAS-21CL manufactured by Nittobo Medical Co., Ltd.

< Solvent >

(Water-Soluble Solvent)

As the organic solvent contained in the ink, a water-soluble organic solvent can be suitably used. Examples of the water-soluble organic solvent include alcohols, polyhydric alcohols, amines, amides, glycol ethers, and 1,2-alkanediols

having 4 or more carbon atoms.

<<Alcohols>>

Examples of the alcohols include methanol, ethanol, 1-propanol, 2-propanol, 1-butanol, 2-butanol, 2-methyl-1-propanol, t-butanol, 3-methoxy-1-butanol, 3-methoxy-3-methylbutanol, 1-octanol, 2-octanol, n-nonyl alcohol, tridecyl alcohol, n-undecyl alcohol, stearyl alcohol, oleyl alcohol, benzyl alcohol and the like.

<<Polyhydric Alcohols>>

Examples of the polyhydric alcohols include ethylene glycol; diethylene glycol; triethylene glycol; propylene glycol; dipropylene glycol; tripropylene glycol; propanediol; butanediol; hexanediol; pentanediol; glycerin and hexanetriol.

<<Amines>>

Examples of the amines include ethanolamine, diethanolamine, triethanolamine, N-methyldiethanolamine, N-ethyldiethanolamine, morpholine, N-ethylmorpholine, ethylenediamine, diethylene diamine, triethylenetetramine, tetraethylenepentamine, polyethyleneimine, pentamethyldiethylenetriamine, tetramethylpropylenediamine and the like.

<<Amides>>

Examples of the amides include formamide, N,N-dimethylformamide, N,N-dimethylacetamide, and the like.

<<Glycol Ethers>>

Examples of the glycol ethers include ethylene glycol monoethyl ether, ethylene glycol monobutyl ether, diethylene glycol monoethyl ether, diethylene glycol monobutyl ether, triethylene glycol monobutyl ether, propylene glycol monopropyl ether, dipropylene glycol monomethyl ether, tripropylene glycol monomethyl ether, and the like.

<<1,2-Alkanediols Having 4 Or More Carbon Atoms>>

Examples of the 1,2-alkanediols having 4 or more carbon atoms include 1,2-butanediol, 1,2-pentanediol, 1,2-hexanediol, and 1,2-heptanediol.
The organic solvent particularly preferably used is a polyhydric alcohol, which can suitably suppress bleeding during high-speed printing. Specifically, ethylene glycol, diethylene glycol, triethylene glycol, propylene glycol, dipropylene glycol, and tripropylene glycol are preferable.
The ink may contain one kind or a combination of two or more kinds selected from these water-soluble solvents. The total content of the water-soluble solvent is preferably in the range of 5 to 40% by mass and more preferably in the range of 10 to 40% by mass relative to 100% by mass of the total mass of the first ink.

<Surfactant>

It is preferable that the first ink contains one kind or more of the surfactant.
When the surfactant according to the present invention is contained in the first ink, the ejection stability of the first ink from a nozzle can be improved, and the spread of a droplet landed on the recording medium (enlargement of a dot diameter) can be controlled.
The surfactant that can be contained in the first ink of the present invention is not particularly limited, but when an anionic compound is contained as another constituent component of the second ink, the ionicity of the surfactant contained in the first ink is preferably anionic, nonionic, or betaine.
In the present invention, it is preferable to use a surfactant having a high static surface tension reducing ability such as fluorine-based or silicone-based surfactants, and a surfactant having a high dynamic surface tension reducing ability such as anionic surfactants such as dioctyl sulfosuccinate, nonionic surfactants such as relatively low molecular weight polyoxyethylene alkyl ethers, polyoxyethylene alkyl phenyl ethers, acetylene glycols, Pluronic surfactants (Pluronic is a registered trademark), and sorbitan derivatives.
It is also preferable to use a fluorine-based or silicone-based surfactant in combination with a surfactant having a high dynamic surface tension reducing ability.

(Silicone-Based Surfactant)

By adding a silicone-based or fluorine-based surfactant as the surfactant, it is possible to further suppress the ink mixing (beading) on the recording medium made of various hydrophobic resins such as a vinyl chloride sheet or the recording medium having a low ink absorbing ability such as printing paper. As a result, it is preferable in that a printed image having high quality can be obtained.

The silicone-based surfactant is preferably polyether-modified silicone, and examples thereof include siloxane having an alkylene oxide group in a side chain and/or at both ends of a polydimethylsiloxane chain.

Specific examples thereof include BYK-307, BYK-331, BYK-333, BYK-345, BYK-3450, BYK-3451, BYK-3455, BYK-346, BYK-347, BYK-348, BYK-349 manufactured by Byk-Chemie GmbH, TEGO Wet KL 245, TEGO Wet 250, TEGO Wet 260, TEGO Wet 270, TEGO Wet 280 manufactured by Evonik Operations GmbH, and KF-351A, KF-352A, KF-353, KF-354L, KF-355A, KF-615A, KF-640, KF-642, KF-643, KF-644, KF-945, KF-6011, KF-6012, KF-6015, KF-6017, KF-6020, KF-6204, X-22-4515 manufactured by Shin -Etsu Chemical Co., Ltd.

As the polyether-modified silicone, trisiloxane having an alkylene oxide group in a side chain and/or at both ends of a polydimethylsiloxane chain is particularly preferable.

The use of trisiloxane can effectively reduce the dynamic surface tension of the first ink, providing an image with good adhesion to the base material.

The trisiloxane preferably has a structure represented by the following General Formula (1).

[Chemical Formula 1]

General Formula (1)

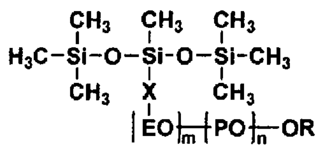

In General Formula (1), "EO" represents a repeating unit structure of polyethylene oxide, that is, a structure in which ethylene oxide, which is a three membered cyclic ether, is ring-opened.

In addition, "PO" represents a repeating unit structure of polypropylene oxide, that is, a structure in which propylene oxide, which is a three membered cyclic ether, is ring-opened.

The order of [EO] m and [PO] n may be either order

Here, "the order of [EO]m and [PO]n may be either order" means that in the compound molecule represented by General Formula (1), the order of the bonding positions with respect to the siloxane skeleton serving as a base may be appropriately changed.

In General Formula (1), X is preferably an alkylene group having 3 carbon atoms (i.e., a propylene group).

Furthermore, in the General Formula (1), it is preferable that m is an integer of 5 to 20 and n is an integer of 0 to 6.

As specific examples of the silicone-based surfactant having the structure represented by General Formula (1), S-1 to S-8 are shown below, but the silicone-based surfactant is not limited thereto.

(S-1): in General Formula (1), R = methyl group, X = alkylene group having 3 carbon atoms, m = 9, n = 0
(S-2): in General Formula (1), R = butyl group, X = alkylene group having 3 carbon atoms, m = 25, n = 6
(S-3): in General Formula (1), R = hydrogen atom, X = alkylene group having 3 carbon atoms, m = 3, n = 0
(S-4): in General Formula (1), R = hydrogen atom, X = alkylene group having 3 carbon atoms, m = 33, n = 0
(S-5): in General Formula (1), R = hydrogen atom, X = alkylene group having 3 carbon atoms, m = 22, n = 16
(S-6): in General Formula (1), R = hydrogen atom, X = alkylene group having 3 carbon atoms, m = 9, n = 0
(S-7): in General Formula (1), R = hydrogen atom, X = alkylene group having 3 carbon atoms, m = 12, n =3
(S-8): in General Formula (1), R = hydrogen atom, X = alkylene group having 3 carbon atoms, m = 1, n = 0

Examples of the trisiloxane include BYK-3450 and BYK-3451 manufactured by BYK Japan Co., Ltd, and TEGOWetKL245, TEGOWet250, TEGOWet260, TEGOWet270, and TEGOWet280 manufactured by Evonik Operations GmbH.

Furthermore, the content of the polyether-modified silicone is preferably within a range of 0.5 to 2% by mass and more preferably within a range of 0.5 to 1.5% by mass relative to 100% by mass of the total mass of the first ink.

(Fluorine-Based Surfactant)

The fluorine-based surfactant means a surfactant in which a part or all of hydrogen bonded to carbon of a hydrophobic group of an ordinary surfactant is substituted with fluorine atoms.
Among them, those having a perfluoroalkyl group in the molecule are preferable.
Among the above fluorine-based surfactants, certain ones are commercially available from Dainippon Ink and Chemicals, Inc. under the trade name of Megafac F, from Asahi Glass Co., Ltd. under the trade name of Surflon, from Minnesota Mining and Manufacturing Company under the trade name of Fluorad FC, from Imperial Chemical Industries, Inc. under the trade name of Monflor, fromE I Du Pont De Nemours and Co under the trade name of Zonyls, and from Farbewerke Hoechst under the trade name of Licowet VPF.
Examples of commercially available products of the acetylene glycol-based surfactant include OLFINE E1010 (manufactured by Nissin Chemical Industry Co., Ltd).
The content of the surfactant in the first ink is not particularly limited, but is preferably in the range of 0.1 to 5.0% by mass relative to the total mass of the first ink.

<Water>

Water that can be used in the first ink according to the present invention is not particularly limited and may be ion-exchanged water, distilled water, or pure water.

<Other Components>

The first ink according to the present invention may appropriately contain other components such as a crosslinking agent, an antifungal agent, and a bactericide as long as the effects of the present invention are not impaired.
Furthermore, various known additives can also be contained, for example, ultraviolet absorbers described in JP S57-74193A, S57-87988A and S62-261476A, anti-fading agents, and various anionic, cationic or nonionic surfactants described in JP S57-74192A, S57-87989A, S60-72785A, S61-146591A, H01-95091A, H03-13376A, and the like, fluorescent whitening agents, antifoaming agents, lubricants such as diethylene glycol, preservatives, thickeners, and anti-charging agents described in JP S59-42993A, S59-52689A, S62-280069A, S61-242871A and H04-219266A, and the like.

[Second Ink]

The second ink according to the present invention is an ink that is mixed in a liquid state with the first ink on the recording medium. The second ink contains a white pigment and a resin emulsion. The second ink may also contain a solvent, a surfactant, water, and other components.

<White Pigment>

The white pigment according to the present invention is not particularly limited as long as the white pigment is a pigment that causes a cured film formed by curing the second ink containing the white pigment to exhibit white.
Examples of the white pigment include titanium oxide, zinc oxide, zinc sulfide, calcium carbonate, calcium silicate, barium sulfate, aluminum hydroxide, antimony oxide, zirconium dioxide, silicas such as finely divided silicic acid and synthetic silicates, talc, clay, white hollow resin particles, and white polymer particles. Among these, in view of white (color developing properties), a white metal oxide is preferable and titanium oxide is more preferable.
These may be used by one kind alone or in combination of two or more kinds thereof.
In view of whiteness (coloring properties), the particle diameter of the white pigment in a dispersed state (average dispersed particle diameter) is preferably in a range of 150 to 350 nm, more preferably in a range of 160 to 320 nm, and still more preferably in a range of 180 to 300 nm.
Note that here, the "the white pigment in a dispersed state" may be when the white pigment dispersion used in the preparation of the ink is prepared, or when the prepared ink is redispersed after long-term storage.
The average dispersed particle diameter can be measured using a particle diameter measuring apparatus and a dynamic light scattering method.
A slurry containing the white pigment is diluted with ion-exchanged water so that the content of the white pigment is 0.1% by mass, the diluted slurry is irradiated with laser light, and the intensity of scattered light scattered from the white pigment is measured as a change over time in microseconds. The detected scattering intensity distribution attributed to the white pigment is fitted to a normal distribution, and the Z average particle diameter of the white pigment particles is obtained by a cumulant analysis method.

An example of the particle diameter measuring apparatus includes Zetasizer Nano Z90 manufactured by Spectris Co., Ltd. The particle diameter measuring apparatus is equipped with data analysis software, and the data analysis software automatically analyzes the measurement data to calculate the Z average particle diameter.

The content of the white pigment is preferably in a range of 2 to 20% by mass, more preferably in a range of 3 to 18% by mass, and still more preferably in a range of 5 to 15% by mass with respect to the total mass of the second ink.

The white pigment according to the present invention is particularly preferably titanium oxide. When the white pigment is titanium oxide, the white degree (coloring properties and opacity) can be excellent, and the image quality can be improved as the particle diameter in a dispersed state can be adjusted within a suitable range.

The crystal form of the titanium oxide may be any of a rutile type (tetragonal), an anatase type (tetragonal), or a brookite type (orthorhombic). From the viewpoint that the particle diameter at the time of dispersion can be made smaller, an anatase type having a relatively small specific gravity is preferred. In addition, from the viewpoint of further enhancing the opacity of an image to be formed, a rutile type having a relatively large refractive index in the visible light region is preferable. Further, the rutile type exhibits photocatalytic activity.

One of the titanium oxides having a crystal form listed above may be used alone, or two or more of the titanium oxides having different crystal forms may be used in combination.

In view of dispersibility, the titanium oxide is preferably surface-treated. In the surface treatment, at least part or all of the particles is to be treated.

The surface treatment of titanium dioxide is not particularly limited, and examples thereof include a surface treatment with at least one of organic compounds such as alumina, silica, zinc oxide, zirconia, magnesium oxide, etc. and a surface treatment with at least one of inorganic compounds such as titanium coupling agent, silane coupling agent, and silicone oil.

From the viewpoint of high color developability, the surface is preferably treated with at least one of alumina, silica, and an organic compound. In particular, it is more preferable that the surface is treated with alumina. Since the white ink has high color developability, in a case where the white ink is used for the purpose of concealing the transparency or color of the recording medium, the white ink has excellent concealability and enhances the color developability of the color ink to be applied in an overlapping manner. That is, the image quality can be improved.

Note that the white pigment other than titanium oxide is also preferably surface-treated.

Commercially available titanium dioxide includes, for example, "CR-EL", "CR-50", "CR-50-2", "CR-58", "CR-80", "CR-90", "R-680", "R-930", "PF691", "A-220" (Ishihara Sangyo Kaisya, Ltd.), "TCR-52", "R-310", "R-32", "A-190", "A-197" (Sakai Chemical Industry Co., Ltd) "KR-310", "KR-380", "KR-380N" (Titan Kogyo, Ltd.).

(Pigment Dispersant)

The second ink according to the present invention preferably contains a pigment dispersant for dispersing the pigment.

The pigment dispersant is not particularly limited, but is preferably a polymer dispersant having an anionic group. A polymer dispersant having a molecular weight in the range of 5000 to 200000 can be suitably used.

Examples of the polymer dispersant include: block copolymers and random copolymers having a structure derived from two or more monomers selected from styrene, styrene derivatives, vinylnaphthalene derivatives, acrylic acid, acrylic acid derivatives, maleic acid, maleic acid derivatives, itaconic acid, itaconic acid derivatives, fumaric acid, and fumaric acid derivatives; salts thereof; polyoxyalkylenes; and polyoxyalkylene alkyl ethers.

The polymer dispersant preferably has an acryloyl group. The polymer dispersant is preferably added after neutralization with a neutralizing base.

Here, the neutralization base is not particularly limited, but is preferably an organic base such as ammonia, monoethanolamine, diethanolamine, triethanolamine, or morpholine.

In particular, when the pigment is titanium oxide, the titanium oxide is preferably dispersed with a polymer dispersant having an acryloyl group.

The amount of the polymer dispersant to be added is preferably within a range of 10 to 100% by mass, more preferably within a range of 10 to 40% by mass relative to the pigment.

It is particularly preferable that the pigment has a form of a so-called capsule pigment in which the pigment is coated with the above-described polymer dispersant.

As a method of coating the pigment with the polymer dispersant, various known methods can be used. Preferable examples of the method include a phase inversion emulsification method, an acid precipitation method, and a method of dispersing a pigment with a polymerizable surfactant, supplying a monomer thereto, and coating the pigment with the monomer while polymerizing the monomer.

In a particularly preferred method, the water-insoluble resin is dissolved in an organic solvent such as methyl ethyl ketone, and the acidic groups in the resin are partially or completely neutralized with a base. There is the method in which, thereafter, the pigment and ion-exchanged water are added thereto, followed by dispersion, removal of the organic

solvent, and if necessary, addition of water.

The average particle diameter of the pigment in a dispersed state in the second ink is preferably 50 nm or more and less than 200 nm.

Thus, the dispersion stability of the pigment can be improved, and the storage stability of the second ink can be improved.

The particle diameter of the pigment can be measured by a commercially available particle diameter measuring apparatus using a dynamic light scattering method, an electrophoresis method, or the like. In particular, measurement by a dynamic light scattering method is simple and can measure the particle size range with accuracy.

The pigment can be used after being dispersed by a dispersing machine together with a dispersant and other additives necessary for various desired purposes.

As the dispersing machine, a conventionally known ball mill, sand mill, line mill, high-pressure homogenizer or the like can be used.

In particular, it is preferable to disperse the pigment by the sand mill because the particle size distribution becomes sharp.

The material of the beads used for the sand mill dispersion is not particularly limited, but is preferably zirconia or zircon. In a case of zirconia or zircon, it is possible to prevent generation of bead broken pieces or contamination of ion components.

Furthermore, the bead size is preferably within a range of 0.3 to 3 mm.

The content of the pigment in the second ink is not particularly limited, but the content of titanium oxide is preferably in a range of 7 to 18% by mass, and the content of the organic pigment is preferably in a range of 0.5 to 7% by mass.

<Resin Emulsion>

The "resin emulsion" contained in the second ink according to the present invention refers to a state in which resin fine particles are emulsified and dispersed in a dispersion medium containing water, a water-soluble organic compound, or the like, that is, a state of an emulsion. ^^^^^^^^^^^

The resin fine particles are preferably water-insoluble resin fine particles.

The glass transition temperature (Tg [°C]) of the resin fine particles is preferably in the range of 40 to 90°C.

The glass transition temperature can be specified by reading a glass transition temperature (Tg [°C]) from an endothermic peak when a temperature is increased under conditions of a temperature increase rate of 10 [°C/min] in a temperature range of -30 to 200 [°C] using a differential scanning calorimeter (DSC).

The water-insoluble resin particle preferably used in the present invention is a water-insoluble resin particle that can receive the second ink and exhibits solubility or affinity for the second ink.

The "water-insoluble resin fine particle" used in the present invention is originally water-insoluble, but has a form in which a resin is dispersed in an aqueous medium as a micro fine particle. The "water-insoluble resin fine particle" is a water-insoluble resin that is dispersed in water by forced emulsification with an emulsifier or the like, or a self-emulsifiable water-insoluble resin that forms a stable aqueous dispersion by itself without using an emulsifier or a dispersion stabilizer by introducing a hydrophilic functional group into the molecule.

These resin are usually used in a state of being emulsified and dispersed in water or a water/alcohol mixed solvent.

In the present invention, the term "water-insoluble" means that when the resin is dried at 105°C for 2 hours and then dissolved in 100 g of water at 25°C, the amount of dissolution is not more than that of 10 g. The dissolution amount is preferably 5 g or less, and more preferably 1 g or less.

The resin having the glass transition temperature in the range of 40 to 90 °C is preferably any one of an acrylic resin, an urethane resin, a polyester, or a composite resin of the urethane resin and the acrylic resin. In particular, the resin is an acrylic resin, a urethane resin, polyester, or a composite resin of a urethane resin and an acrylic resin.

These resin particles preferably have an average particle diameter of 200 nm or less in the resin emulsion. In particular, the average particle diameter is preferably 80 to 200 nm, more preferably in the range of 100 to 150 nm.

The polyester resin, urethane resin, polyolefin resin, acrylic resin, or composite resin fine particles of urethane resin and acrylic resin are preferably anionic or nonionic.

In particular, the resin fine particles contained in the second ink preferably have an acid structure. When the resin fine particle contains the acid structure, the resin fine particle can be dispersed in water even when the amount of the surfactant added is small, and thus the water resistance of the second ink coating film is improved.

This is called a self-emulsifying type, which means that a resin can be stably dispersed in water only with molecular ionic property without using the surfactant

Examples of the acid structure include acid groups such as a carboxy group (-COOH) and a sulfonic acid group ($-SO_3H$).

The acid structure may be present in a side chain of the resin or may be present at a terminal thereof.
The second ink according to the present invention particularly preferably contains a water-dispersible polyester having a sulfonic acid group. Thus, high adhesion to the base material is obtained.
Some or all of the acid structures are preferably neutralized.
By neutralizing the acid structure, the water dispersibility of the resin can be improved.
As an example of the neutralizing agent for neutralizing an acid structure, organic amines are preferable, and it is preferable to use organic amines such as trimethylamine, triethylamine, tripropylamine, tributylamine, N-methyldiethanolamine, and triethanolamine.
Hereinafter, each of the resin will be described.

(Polyester)

The polyester having a polyester skeleton used as the water-insoluble resin particles can be obtained by using a polyhydric alcohol component and a polycarboxylic acid component such as a polycarboxylic acid, a polycarboxylic acid anhydride, or a polycarboxylic acid ester.
Specific examples of the polyhydric alcohol component include dihydric alcohols (diols) such as alkylene glycols having 2 to 36 carbon atoms (e.g., ethylene glycol, 1,2-propylene glycol, 1,3-propylene glycol, 1,4-butylene glycol, and 1,6-hexanediol), alkylene ether glycols having 4 to 36 carbon atoms (e.g., diethylene glycol, triethylene glycol, dipropylene glycol, polyethylene glycol, polypropylene glycol, and polybutylene glycol), cycloaliphatic diols having 6 to 36 carbon atoms (e.g., 1,4-cyclohexanedimethanol and hydrogenated bisphenol-A), adducts of the cycloaliphatic diols with alkylene oxides having 2 to 4 carbon atoms (e.g., ethylene oxide (hereinafter abbreviated as EO), propylene oxide (hereinafter abbreviated as PO), and butylene oxide (hereinafter abbreviated as BO)) (addition mole number: 1 to 30), and adducts of bisphenols (e.g., bisphenol-A, bisphenol-F, and bisphenol-S) with alkylene oxides having 2 to 4 carbon atoms (e.g., EO, PO, and BO) (addition mole number: 2 to 30).
These may be used alone or in combination of two or more kinds thereof.
Examples of the polyvalent carboxylic acid component include divalent carboxylic acids (dicarboxylic acids), specifically alkanedicarboxylic acids having 4 to 36 carbon atoms (e.g., succinic acid, adipic acid, and sebacic acid), alkenylsuccinic acids (e.g., dodecenylsuccinic acid), alicyclic dicarboxylic acids having 4 to 36 carbon atoms (e.g., dimer acid (dimerized linoleic acid)), alkenedicarboxylic acids having 4 to 36 carbon atoms (e.g., maleic acid, fumaric acid, citraconic acid, and mesaconic acid), and aromatic dicarboxylic acids having 8 to 36 carbon atoms (e.g., phthalic acid, isophthalic acid, terephthalic acid, or derivatives thereof, and naphthalenedicarboxylic acid).
These may be used alone or in combination of two or more kinds thereof.
The polyester is preferably a polyester having an anionic group in the molecule, and among these, a polyester containing a sulfonic acid group is preferable.
As a known synthesis method for obtaining a polyester containing a sulfonic acid group, for example, there is a method such as a polycondensation reaction between a dicarboxylic acid having a sulfonic acid group and a diol. In addition, as the known synthesis method, there is also a method such as a polycondensation reaction of a dicarboxylic acid and a diol having a sulfonate.
Specific examples of the dicarboxylic acids having a sulfonic acid group include, but are not limited to, 2-sulfoterephthalic acid, 5-sulfoisophthalic acid, 4-sulfonaphthaleneisophthalic acid-2,7-dicarboxylic acid and 5-(4-sulfophenoxy)isophthalic acid, or alkali metal salts thereof.
Examples of the diol having a sulfonic acid group include 2-sulfo-1,4-butanediol, 2,5-dimethyl-3-sulfo-2,5-hexanediol, and alkali metals salts thereof.
The number average molecular weight of the polyester is preferably in the range of 1,000 to 50000, and more preferably in the range of 2000 to 20000.
As the polyester, a commercially available product may be used. Examples of commercially available products of the water-dispersible polyester having a sulfonic acid group include Vylonal MD-1100, MD-1200, MD-1245, MD-1480, and MD-1500 manufactured by Toyobo Co., Ltd., Plascoat Z-221, Z-446, Z-561, Z-880, and Z-3310 manufactured by Goo Chemical Co., Ltd, and Pesresin A-520, A-613D, A-615GE, a-640, A-645GH, A-647GEX, A-110F, and A-160P manufactured by Takamatsu Oil & Fat Co., Ltd.
Among the above, a resin having a glass transition temperature of 40 to 90°C is particularly preferable. Examples of the resin include Vylonal MD-1100, MD-1200, MD-1245, and MD-1500 manufactured by Toyobo Co., Ltd., Plascoat Z-221, Z-446, and Z-561 manufactured by Goo Chemical Co., Ltd, and Pesresin A-520, A-613D, A-615GE, A-640, A-645GH, and A-647GEX manufactured by Takamatsu Oil & Fat Co., Ltd.
Furthermore, KA-3556S, KA-5071S, and KT-0507 manufactured by Unitika Ltd., GX-1250 manufactured by GOO CHEMICAL CO., LTD, and the like are also suitably used.
These may be used alone or in combination of two or more kinds thereof.

(Urethane Resin)

As the urethane resin used as the water-insoluble resin particles according to the present invention, those having a hydrophilic group can be used.
The urethane resin is preferably an aqueous dispersion in which a self-emulsifying urethane having a water-soluble functional group, that is, a hydrophilic group in its molecule is dispersed, or an aqueous dispersion of a forcibly emulsifying urethane which is emulsified under strong mechanical shear force using a surfactant in combination.
The urethane resin in the aqueous dispersion can be obtained by a reaction of a polyol with an organic polyisocyanate and a hydrophilic group-containing compound.
Examples of polyols that may be used in the preparation of the aqueous dispersion of the urethane resin include polyester polyol, polyether polyol, polycarbonate polyol, and polyolefin-based polyol.
Examples of the polyester polyol include low molecular weight polyol such as ethylene glycol, diethylene glycol, triethylene glycol, 1,2- and 1,3-propylene glycol, neopentyl glycol, 1,3- and 1,4-butanediol, 3-methylpentanediol, hexamethylene glycol, 1,8-octanediol, 2-methyl-1,3-propanediol, bisphenol-A, hydrogenated bisphenol-A, trimethylolpropane, and cyclohexanedimethanol; and condensates with polyvalent carboxylic acid such as succinic acid, glutaric acid, adipic acid, sebacic acid, phthalic acid, isophthalic acid, terephthalic acid, trimellitic acid, tetrahydrofuran, endomethine tetrahydrofuran, and hexahydrophthalic acid.
Examples of the polyether polyol include polyethylene glycol, polypropylene glycol, polyethylene polytetramethylene glycol, polypropylene polytetramethylene glycol, polytetramethylene glycol and the like.
An example of the polycarbonate polyol can be obtained by reacting a carbonic acid derivative such as diphenyl carbonate, dimethyl carbonate, or phosgene with a diol.
Examples of the diols include ethylene glycol, diethylene glycol, triethylene glycol, 1,2- and 1,3-propylene glycol, neopentyl glycol, 1,3- and 1,4-butanediol, 3-methylpentanediol, hexamethylene glycol, 1,8-octanediol, 2-methyl-1,3-propanediol, bisphenol-A, hydrogenated bisphenol-A, trimethylolpropane, and cyclohexanedimethanol.
In addition, examples of the organic polyisocyanate which can be used in the preparation of the aqueous dispersion of the urethane resin include aromatic isocyanates such as tolylene diisocyanate (TDI), diphenylmethane diisocyanate (MDI), polymeric MDI, xylylene diisocyanate (XDI), and tetramethylxylylene diisocyanate (TMXDI); aliphatic isocyanates such as hexamethylene diisocyanate (HMDI); and alicyclic isocyanates such as isophorone diisocyanate (IPDI) and 4,4'-dicyclohexylmethane diisocyanate (hydrogenated MDI, H12MDI).
These may be used alone or in combination of two or more kinds thereof.
Examples of the hydrophilic group-containing compounds that can be used for the preparation of the aqueous dispersion of urethane resin include carboxylic acid-containing compounds such as 2,2-dimethylolpropionic acid, 2,2-dimethylolbutanoic acid, 2,2-dimethylolbutyric acid, 2,2-dimethylolvaleric acid and glycine, and derivatives thereof such as sodium salts, potassium salts and amine salts; sulfonic acid-containing compounds such as taurin (i.e., aminoethylsulfonic acid) and ethoxypolyethylene glycol sulfonic acid and derivatives thereof such as sodium salts, potassium salts and amine salts.
The urethane resin can be obtained by a known method.
For example, the urethane prepolymer can be obtained by mixing the polyol, the organic polyisocyanate, and the hydrophilic group-containing compound, and reacting the mixture at a temperature in the range of 30 to 130°C for 30 minutes to 50 hours.
The urethane prepolymer becomes the urethane resin having the hydrophilic group by being elongated and polymerized by a chain extender.
The chain extender is preferably water and/or an amine compound.
By using water or an amine compound as the chain extender, it is possible to react with a free isocyanate in a short time and efficiently extend the isocyanate-terminated prepolymer.
Examples of the amine compound as a chain extender include aliphatic polyamines such as ethylenediamine and triethylenediamine; aromatic polyamines such as metaxylenediamine and tolylenediamine; and polyhydrazino compounds such as hydrazine and adipic acid dihydrazide.
The amine compound may contain, together with the polyamine, a monovalent amine such as dibutylamine or methyl ethyl ketoxime as a reaction terminator to the extent that the polymerization is not significantly inhibited.
Note that in the synthesis of the urethane prepolymer, the solvent that is inert to isocyanate and can dissolve the urethane prepolymer may be used.
Examples of these solvents include dioxane, methyl ethyl ketone, dimethylformamide, tetrahydrofuran, N-methyl-2-pyrrolidone, toluene, and propylene glycol monomethyl ether acetate.
It is preferable that these hydrophilic organic solvents used in the reaction stage are finally removed.
In addition, in the synthesis of the urethane prepolymer, in order to accelerate the reaction, a catalyst such as an amine catalyst (for example, triethylamine, N-ethylmorpholine, or triethyldiamine), a tin-based catalyst (for example, dibutyltin dilaurate, dioctyltin dilaurate, or tin octylate), or a titanium-based catalyst (for example, tetrabutyl titanate) may

be added.

It is preferable to increase the number average molecular weight of the urethane resin as much as possible by introducing a branched structure or an internal crosslinked structure, and the number average molecular weight is preferably 50000 to 10000000.

By setting the molecular weight within the above range, the urethane resin becomes less soluble in the solvent, and therefore, the coating film excellent in weather resistance and water resistance is obtained.

Note that the number average molecular weight (Mn) is a value measured by gel permeation chromatography (GPC). The number-average molecular weight (Mn) can be determined from a calibration curve prepared with polystyrene standard samples using, for example, "RID-6A" manufactured by Shimadzu Corporation (column: "TSK-GEL" manufactured by Tosoh Corp., solvents: tetrahydrofuran (THF), column temperature: 40°C).

A commercially available product may be used as the urethane resin.

Examples of commercially available products of the urethane resin having a glass transition temperature in the range of 40 to 90°C include Neorez R-967, R-600, and R-9671 manufactured by Kusumoto Chemicals, Ltd., Evafanol HA-560 manufactured by Nicca Chemical Co., Ltd, and SF-870 and SF-860 manufactured by Dai-ichi Kogyo Seiyaku Co., Ltd.

(Acrylic Resin)

The acrylic resin used as the water-insoluble resin particles can be obtained using a copolymer with an acrylic acid ester component, a methacrylic acid ester component, a styrene component, or the like.

Examples of the acrylate ester components and the methacrylate ester components include methyl (meth) acrylate, ethyl (meth) acrylate, propyl (meth) acrylate, butyl (meth) acrylate, 2-hydroxyethyl (meth) acrylate, 2-hydroxypropyl (meth) acrylate, 4-hydroxybutyl (meth) acrylate, cyclohexyl (meth) acrylate, tetrahydrofurfuryl (meth) acrylate, isobornyl (meth) acrylate, benzyl (meth) acrylate, 2-hydroxybutyl (meth) acrylate, benzyl (meth) acrylate, glycidyl (meth) acrylate, (meth) acrylate, ethylene glycol di (meth) acrylate, 1,4-butanediol di (meth) acrylate, 1,6-hexanediol di (meth) acrylate, trimethylolpropane tri (meth) acrylate, glycerol di (meth) acrylate, 2-ethylhexyl (meth) acrylate, lauryl (meth) acrylate, stearyl (meth) acrylate, and acrylamides.

Examples of the styrene component include styrene, 4-methylstyrene, 4-hydroxystyrene, 4-acetoxystyrene, 4-acetylstyrene, and styrene sulfonic acid.

These components may be used alone or in combination of two or more kinds thereof.

The number average molecular weight (Mn) of the acrylic resin is preferably within a range of 1000 to 50000, more preferably within a range of 2000 to 20000.

When the number average molecular weight (Mn) of the acrylic resin is 1000 or more, the aggregation force of the coating film becomes strong, and the adhesion is improved. This is because when the number average molecular weight (Mn) of the acrylic resin is 50000 or less, the solubility in an organic solvent is good, and the micronization of the particle diameter of the emulsified dispersion is promoted.

Note that the number average molecular weight (Mn) is a value measured by gel permeation chromatography (GPC). The number-average molecular weight (Mn) can be determined from a calibration curve prepared with polystyrene standard samples using, for example, "RID-6A" manufactured by Shimadzu Corporation (column: "TSK-GEL" manufactured by Tosoh Corp., solvents: tetrahydrofuran (THF), column temperature: 40°C).

A commercially available product may be used as the acrylic resin.

Examples of commercially available products of the acrylic resin having a glass transition temperature in the range of 40 to 90°C include Mowinyl 6899D, 6969D, and 6800 produced by Japan Coating Resins Co., Ltd, and acryl-based emulsions such as TOCRYL W-7146, W-7147, W-7148, W-7149, and W-7150 produced by Toyochem Co., Ltd.

(Polyolefin Resin)

As the polyolefin resin contained in the ink according to the present invention, polyethylene, polypropylene, ethylene-propylene copolymer, random copolymer or block copolymer of ethylene and/or propylene and other comonomer (for example, 1-butene, 1-pentene, 1-hexene, 1-heptene, 1-octene, 1-nonene having 2 or more carbon atoms, or $\alpha$-olefin comonomer having 2 to 6 carbon atoms) (for example, ethylene-propylene-butene copolymer) can be used.

In addition, as the polyolefin resin, a copolymer obtained by copolymerizing two or more kinds of the above-mentioned other comonomers, and a mixture of two or more kinds of the above-mentioned polymers can also be used.

Furthermore, the polyolefin resin may be a commercially available product. Examples of commercially available products of polyolefin resin include ARROWBASE SB-1200 manufactured by Unitika Ltd., AUROREN 150A, AUROREN AE-301, and SUPERCHLON E-415 manufactured by Nippon Paper Industries, Ltd., HARDLEN Na-1001 manufactured by Toyobo Co., Ltd, and MP-101 manufactured by Seiko PMC Corporation.

(Composite Resin Fine Particles)

The composite resin fine particles that can be contained in the second ink are preferably composite resin fine particles formed by emulsifying the acrylic resin in the urethane resin.
That is, the composite resin fine particle is preferably a composite resin fine particle having an inner layer composed of the acrylic resin and a surface layer composed of the urethane resin.
Here, the urethane resin exists at the interface between the acrylic resin as the water-insoluble resin particles and water as a continuous phase, and functions as a water-insoluble resin particle layer different from the resin that protects the water-insoluble resin particles.
When the composite resin fine particles are formed by emulsifying the acrylic resin with the urethane resin as described above, the physical property of the image (coating film) can be improved as compared with the case where the acrylic resin and the urethane resin are separately emulsified and mixed. Furthermore, the storage stability of the composite resin fine particle can also be improved.
In the composite resin fine particles obtained by emulsifying the acrylic resin in the urethane resin, the value (U/A) of a mass ratio between the urethane resin (U) and the acrylic resin (A) is preferably 40/60 to 95/5.
When the proportion of the urethane resin (U) is within the above range, the compatibility with the dispersant is improved, and the solvent resistance is also improved.
In addition, when the presence ratio of the acrylic resin (A) is within the above range, adhesion to the acrylic film is excellent.
In the above abundance ratio, the value (U/A) of the mass ratio between the urethane resin (U) and the acrylic resin (A) is preferably within the range of 40/60 to 80/20.
The total resin concentration of the acrylic resin and the urethane resin in the composite resin fine particle is not particularly limited, but is preferably 5.0 % by mass or more, more preferably in the range of 10.0 to 70.0 % by mass.
When the resin concentration is within the above range, the fixability of the second ink onto the recording medium becomes satisfactory.
In the emulsification of the acrylic resin with the urethane resin, the surfactant acting as the emulsifier can be used together with the urethane resin.
Here, by adding the emulsifier, the storage stability of the composite resin fine particles can be improved.
As the emulsifier, the anionic surfactant and the nonionic surfactant can be used.
The average particle diameter of the fine composite-resin particles is not particularly limited, but is preferably in a range of 10 to 500 nm in the resin emulsion. Furthermore, the average particle diameter is more preferably within a range of 10 to 300 nm, and still more preferably within a range of 80 to 200 nm.
The average particle diameter can be measured by a commercially available particle diameter measuring instrument using a dynamic light scattering method, an electrophoresis method, or the like, but the measurement by the dynamic light scattering method is simple and can accurately measure the region of the particle diameter with high accuracy.
The use of composite resin fine particles in which the acrylic resin is emulsified in the urethane resin can improve the fixability of the image (coating film) to an absorbent base material or a non-absorbent base material.

<Solvent>

Examples of the solvent that can be contained in the second ink according to the present invention include the same solvents as those contained in the first ink, and the water-soluble solvent is preferably used.
As the solvent, specifically, propylene glycol, diethylene glycol monobutyl ether, 2-methyl-1, 3-propanediol, and the like are preferably used, and these may be used alone or in combination of two or more.
When the total mass of the second ink is defined as 100% by mass, the proportion of the water-soluble solvent is preferably within a range of 10 to 35% by mass.

<Surfactant>

As the surfactant contained in the second ink according to the present invention, the same surfactant as those used in the first ink described above can also be used.
In particular, it is more preferable to select the surfactant in which the static surface tension of the water-soluble solvent including the surfactant contained in the second ink is 25 mN/m or less at 25°C. By selecting such surfactant, it becomes the surfactant suitable for the solvent, and drying cracks of the coating film can be suppressed.
The "static surface tension" in the present invention is the surface tension of the water-soluble solvent when the water-soluble solvent species and the surfactant used in the second ink are mixed, and does not include the white pigment, the resin particles, and water.

As a method for measuring the static surface tension, first, a solution is prepared by mixing the water-soluble solvent and the surfactant to be used in the second ink. Next, the static surface tension of the prepared solution was measured at 25°C using a static surface tensiometer (CBVP-Z: manufactured by Kyowa Interface Science Co., Ltd.) using the Wilhelmy method.
The surfactant contained in the second ink may be one type, but it is preferable to use two or more types.
As preferred surfactant, OLFINE E1010 (manufactured by Nissin Chemical Industry Co., Ltd), TEGOWet270 (manufactured by Evonik Operations GmbH), TEGOWet250 (manufactured by Evonik Operations GmbH), KF-351A (manufactured by Shin -Etsu Chemical Co., Ltd), BYK-307 (manufactured by BYK), and the like are preferably combined.

<Water>

Water usable in the second ink according to the present invention is not particularly limited, and may be ion-exchanged water, distilled water, or pure water.

<Other Components>

Similarly to the above-described first ink, the second ink according to the present invention may appropriately contain other components such as a crosslinking agent, an antifungal agent, and a bactericide as long as the effects of the present invention are not impaired.

[Third Ink]

A third ink according to the present invention is the ink that is applied onto a composite coating film of the first ink and the second ink after the combined coating film is formed. The third ink contains the color pigment.
The third ink may contain resin fine particles, a solvent, a surfactant, water, and other components.
Regarding the above-described resin fine particles, solvent, surfactant, water, and other components, those similar to the second ink can be used.

<Color Pigment>

As the color pigment contained in the third ink according to the present invention, an anionic dispersion pigment, for example, a self-dispersing pigment having an anionic group on the surface, a pigment dispersed by an anionic polymer dispersant, or a pigment dispersed by coating the surface with an anionic resin is preferably used.
In particular, the pigment dispersed with the anionic polymer dispersant is preferably used in terms of excellent dispersibility and appropriate reaction between the pre-treatment ink and the pigment to cause pinning.
As the pigment, conventionally known pigments can be used without particular limitation, and for example, organic pigments such as an insoluble pigment and a lake pigment, and inorganic pigments such as titanium oxide can be preferably used.

(Insoluble Pigment)

The insoluble pigment is not particularly limited, but for example, azo, azomethine, methine, diphenylmethane, triphenylmethane, quinacridone, anthraquinone, perylene, indigo, quinophthalone, isoindolinone, isoindoline, azine, oxazine, thiazine, dioxazine, thiazole, phthalocyanine, diketopyrrolopyrrole, and the like are preferable.

(Organic Pigment)

Specific examples of the organic pigment that can be preferably used include the following pigment.
Examples of pigments for magenta or red include, C. I. Pigment Red 2, C. I. Pigment Red 3, C. I. Pigment Red 5, C. I. Pigment Red 6, C. I. Pigment Red 7, C. I. Pigment Red 15, C. I. Pigment Red 16, C. I. Pigment Red 48:1, C. I. Pigment Red 53:1, C. I. Pigment Red 57:1, C. I. Pigment Red 122, C. I. Pigment Red 123, C. I. Pigment Red 139, C. I. Pigment Red 144, C. I. Pigment Red 149, C. I. Pigment Red 166, C. I. Pigment Red 177, C. I. Pigment Red 178, C. I. Pigment Red 202, C. I. Pigment Red 222, and C. I. Pigment Violet 19.
Examples of the pigment for orange or yellow include C. I. Pigment Orange 31, C. I. Pigment Orange 43, C. I. Pigment Yellow 12, C. I. Pigment Yellow 13, C. I. Pigment Yellow 14, C. I. Pigment Yellow 15, C. I. Pigment Yellow 15:3, C. I. Pigment Yellow 17, C. I. Pigment Yellow 74, C. I. Pigment Yellow 93, C. I. Pigment Yellow 128, C. I. Pigment Yellow 94, C. I. Pigment Yellow 138, and C. I. Pigment Yellow 155. Particularly in terms of the balance between color tone and light fastness, C. I. Pigment Yellow 155 is preferred.

Examples of the pigment for green or cyan include C. I. Pigment Blue 15, C. I. Pigment Blue 15:2, C. I. Pigment Blue 15:3, C. I. Pigment Blue 16, C. I. Pigment Blue 60, and C. I. Pigment Green 7.
Examples of the pigment for black include C. I. Pigment Black 1, C. I. Pigment Black 6, and C. I. Pigment Black 7.

(Inorganic Pigment)

Note that according to the present invention, it is possible to suppress bleeding and improve adhesion in a particularly suitable manner for titanium oxide, for which it is generally difficult to ensure the ink ejection stability and adhesion.
Titanium oxide has three crystal forms of an anatase type, a rutile type, and a brookite type, and general-purpose titanium oxides can be roughly classified into the anatase type and the rutile type.
Although not particularly limited, a rutile type having a large refractive index and high concealability is preferable.
Specific examples thereof include the TR series manufactured by Fuji Titanium Industry Co., Ltd., the JR series manufactured by Tayca Corporation, and TIPAQUE manufactured by Ishihara Sangyo Kaisya, Ltd.
The third ink according to the present invention preferably contains the pigment dispersant for dispersing the pigment.
As the pigment dispersant, the same pigment dispersant as contained in the second ink can be used.

2. Inkjet Recording Method

The inkjet recording method of the present invention includes a first step of applying the first ink to the recording medium, a second step of applying the second ink to the recording medium, and a third step of applying the third ink to the recording medium, wherein the first to third inks are each applied to the surface of the recording medium and are coalesced to form the image, and wherein a drying step is not performed between the first step and the second step and between the second step and the third step, and the second ink and the first ink gelate when mixed.

<Recording Medium>

The first ink is applied onto the recording medium by, for example, an inkjet method.
At this time, an applicable recording medium is not particularly limited. The recording medium may be an absorptive base material made of an absorptive material or a non-absorptive base material made of a non-absorptive material, but is preferably a non-absorptive base material from the viewpoint of exhibiting the effects of the present invention.
Note that in the present invention, the term "absorbent" refers to absorbency for water, and the term "non-absorbent" refers to non-absorbency for water.
As the non-absorbent base material, a known plastic film can be used.
Specific examples of the known plastic film include: polyester films such as polyethylene terephthalate; polyamide-based films such as polyethylene films, polypropylene films, and nylon; and biodegradable films such as polystyrene films, polyvinyl chloride films, polycarbonate films, polyacrylonitrile films, and polylactic acid films.
In addition, in order to impart gas barrier properties, moisture-proof properties, aroma retention properties, and the like, a film coated with polyvinylidene chloride on one surface or both surfaces thereof or a film on which a metal oxide is vapor-deposited can also be preferably used.
As the non-absorbent film, either an unstretched film or a stretched film can be preferably used.
The thickness of the base material is, in the case of a plastic film, preferably within a range of 10 to 120 μm, more preferably 12 to 60 μm.
In addition, as the non-absorbent base material, a metal substrate such as a tin plate or a tin-free steel plate for a three piece can is also preferably used. The tin-free steel plate is a TFS plate and has a thickness of 0.1 to 0.6 μm.
In addition, as the non-absorbent base material, for example, a packaging material for canned food provided with a thermal curing resin as a coating layer can be suitably used.
In the packaging material for canned food, for example, an epoxy-phenol-based coating material or a polyester-based laminating agent is generally used on the food side and a polyester-based or acryl-based thermosetting coating material is generally used on the outer side in order to block air, moisture, and light and to seal the food inside.

(1) First Step

The first step is a step of applying the first ink onto the recording medium.
The first ink according to the present invention contains the aggregating agent and has a role of fixing the second ink containing the white pigment on the recording medium.

A method for applying the first ink onto the recording medium is an inkjet method.

The inkjet method is not particularly limited, and a printer including an inkjet head filled with ink can be used.

Specifically, printing can be performed by ejecting the first ink as droplets from nozzles of the inkjet head on the basis of digital signal and landing the droplets on the recording medium.

The inkjet head may be any one of an on-demand type inkjet head and a continuous type inkjet head.

Examples of the on-demand type inkjet head include an electro-mechanical conversion type including a single cavity type, a double cavity type, a bender type, a piston type, a share mode type, and a shared wall type, and an electro-thermal conversion type including a thermal inkjet type and a bubble jet ("bubble jet" is a registered trademark of Canon Inc) type.

Among the above-described inkjet heads, an inkjet head using a piezoelectric element as an electromechanical conversion element used in an electro-mechanical conversion type (also referred to as a piezoelectric inkjet head) is preferable.

The inkjet printer may include an inkjet head of either a scanning method or a single-pass method. In the case of the single-pass method, it is preferable to use an inkjet head of a line head method.

The inkjet head of the line head method refers to an inkjet head having a length equal to or greater than the width of the printing range.

As the inkjet head of the line head method, one head that is equal to or wider than the width of the printing range may be used, or a plurality of heads may be combined to be configured to be equal to or wider than the width of the printing range.

In addition, a plurality of heads may be provided so that the nozzles are arranged in a staggered pattern, and the resolution of these heads as a whole may be increased.

Conveyance speed of the recording medium as the base material can be set within a range of, for example, 1 to 120 m/min.

As the conveyance speed increases, the image forming speed increases.

When the first ink is applied, the attached amount of the first ink per unit area of the recording medium is preferably in a range of 1.1 to 3.4 g/$m^2$. The attached amount is also referred to as an "application amount" or a "coating amount".

(2) Second Step

The second step is a step of applying the second ink so as to be mixed in a liquid state with the first ink on the recording medium. Through the second step, the first ink containing the aggregating agent and the second ink are mixed, a thickening reaction occurs, and gelation occurs.

If the first ink and the second ink are mixed first and then applied to the recording medium instead of on the recording medium that is the base material, droplets of the mixed ink land on the recording medium after thickening, and thus the droplet activation changes and landing deviation occurs.

In addition, when the viscosity increases before landing on the recording medium, the adhesion of both ink to the recording medium deteriorates.

Hereinafter, the term "liquid state" according to the present invention refers to a state having a drying rate (also referred to as a "volatilization rate" or an "evaporation rate") of 30% or less of the solvent, the dispersion medium, or the like contained in the first ink, the second ink, and the third ink.

After the application of the first ink, it is preferable that the second ink is applied within one second.

In particular, when the drying rate of the first ink is within a range of 0 to 30%, the second ink is preferably applied within 0 to 1 second after the application of the first ink.

Note that the "drying rate of the first ink" is defined by the following formula.

$$\text{(drying rate of first ink)} = 1-\text{(mass [g] of first ink after drying)}/\text{(mass [g] of first ink before drying)}$$

Gelation occurs by applying the second ink in a state where the drying rate of the first ink is 30% or less.

Furthermore, applying the second ink within one second after applying the first ink to the recording medium suppresses permeation of the first ink into the absorbent base material and cissing of the first ink on the non-absorbent base material. Then, when the first ink and the second ink are mixed and gelated and the third ink is applied, the third ink can be prevented from sinking. As a result, higher image quality can be achieved.

In order to set the drying rate of the first ink to 30% or less, for example, the time from the application of the first ink to the application of the second ink is adjusted, or the temperature of the recording medium is appropriately adjusted.

Furthermore, when the second ink is applied, the amount of the second ink droplet is preferably adjusted such that the attached amount of the second ink applied per unit area of the recording medium is in a range of 2 to 25 times the attached amount of the first ink applied per unit area of the recording medium. Thus, high image quality can be achieved. A

more preferable range of the attached amount is 3 to 10 times.

In addition, the second step is a step of using an inkjet method in the same manner as in the first step.

(3) Third Step

The third step is a step of applying the third ink onto the gelled coating film formed of the first ink and the second ink. When the third ink is applied onto the gelled coating film, the third ink can be prevented from sinking in the coating film.

In addition, the third step is preferably a step of using an inkjet step in the same manner as in the first step.

(4) Drying Step

The drying step is a step of, after the application of the third ink, heating and drying the area to which the third ink has been applied.

In the drying step, the heating temperature of the area to which the third ink has been applied is preferably within a range of 60 to 200°C. The heating time of the ink is appropriately adjusted in accordance with the type of the recording medium and the ink attached amount.

Water, the water-soluble solvent, and the like that are solvent components in the first to third ink are removed by heating the area where the ink are applied in such a manner. Simultaneously with the removal, particularly in the case of a metal base material, the polyvalent metal salt is dried at a temperature equal to or higher than the thermal decomposition temperature to be thermally decomposed. In addition, the image abrasion resistance and the adhesion to the base material become excellent.

In addition, the heating and drying may be performed using, for example, a non-contact heating type drying apparatus such as a drying furnace or a hot-air blower. Alternatively, the heating and drying may be performed using a contact heating type drying apparatus such as a hot plate or a roller.

The drying temperature can be obtained by measuring any one selected from the following over the entire period of drying the treatment liquid: (a) an atmosphere temperature such as an in-furnace temperature or a hot-air temperature when a non-contact heating type drying apparatus such as a drying furnace or a hot-air blower is used; (b) a temperature of a contact heating section when a contact heating type drying apparatus such as a hot plate or a hot roller is used; and (c) the surface temperature of a surface to be dried. As a measurement place, (c) the surface temperature of the surface to be dried is more preferably measured.

The thickness of the image layer obtained as described above is preferably within a range of 0.3 to 3.0 μm, and more preferably within a range of 0.3 to 2.0 μm. When the thickness of the image layer is 0.3 μm or more, the adhesion and abrasion resistance of the image are easily enhanced. When the thickness of the image layer is 3.0 μm or less, deformation stress imparted to the image layer can be reduced, so that the adhesion of the image layer is hardly impaired.

3. Inkjet Recording System

An inkjet recording system of the present invention includes the above-described ink set of the present invention, a first application means for applying a first ink to the recording medium, a second application means for applying a second ink, and a third application means for applying a third ink, wherein the first to third application means apply the first to third inks to a surface of the recording medium, and the first to third inks are combined to form an image, and between the first application means and the second application means, between the second application means and the third application means, without drying, gelation occurs when the second ink and the first ink are mixed.

The "inkjet recording system" of the present invention refers to an assembly which is constituted by devices or apparatuses having predetermined functions as means and elements necessary for each step of the inkjet recording method, an ink set, and the like, and performs a function of image formation as a whole. It is to be noted that the respective means elements may be individually disposed at different places apart from each other or may be collectively disposed in a certain space as one device to be integrally formed as a system device.

The inkjet recording system of the present invention is a system for forming the image using the first application means, the second application means, and the third application means, and the ink set described above.

Hereinafter, for the convenience of description, an apparatus section including the first application means, the second application means, and the third application means is particularly referred to as an "inkjet recording apparatus".

In the inkjet recording system of the present invention, as long as the system is a form or manner of performing inkjet recording without drying using the first to third application means and the specific ink set in which the second ink is gelated by mixing with the first ink as described above, each of the means constituting the inkjet recording apparatus is not limited. That is, the apparatus used in the present invention only needs to be an apparatus satisfying the above-described conditions, and it is not necessarily required to be an inkjet recording apparatus dedicated to the ink set of the present invention.

Further, the inkjet recording system of the present invention is also preferably provided with a means that records and stores recording and copying information as electronic data and a means that wirelessly communicates the electronic data. For example, a wireless interface for transmitting and receiving information to and from the information processing device by wireless communication such as Bluetooth (R) or Wi-Fi (R) is preferably provided.
Hereinafter, a typical inkjet recording apparatus that can be used in the present invention will be described.

4. Inkjet Recording Apparatus

FIG. 1 is a schematic diagram of an inkjet recording apparatus preferable for the present invention. However, the present invention is not limited thereto.
The inkjet recording apparatus 1 illustrated in FIG. 1 is mainly composed of a first ink application section 10, a second ink application section 20, and a third ink application section 30.
A first ink 12 is applied by the first ink application section 10 and a second ink 22 is applied by the second ink application section 20 onto a base material P sent out from a feed roller 40, whereby the first ink 12 and the second ink 22 are mixed in the liquid state, and an ink coating film F, which is a gelled composite coating film, is formed.
Thereafter, the third ink is applied onto the ink coating film F, which is the composite coating film, by the third ink application section 30, and the area to which the third ink is applied is heated and dried by a dryer 26.
Thereafter, the base material P to which a third ink 25 has been applied is wound up by a winding roller 50, and an image recorded product is obtained.
The first ink application section 10, the second ink application section 20, and the third ink application section 30 are not particularly limited as long as they have a configuration capable of applying each ink onto the base material, but they are preferably inkjet heads in the present invention. Inkjet heads 11, 21, and 24 capable of ejecting ink are installed in the first ink application section 10, the second ink application section 20, and the third ink application section 30, respectively.
FIG. 2 is a schematic diagram of another inkjet recording apparatus preferable for the present invention.
The inkjet recording apparatus 100 illustrated in FIG. 2 is an inkjet recording apparatus using a serial recording method.
The inkjet recording apparatus 100 includes a head carriage 101 that is narrower than the full width of the recording medium P and that houses three inkjet heads H1 to H3.
The inkjet head H1, the inkjet head H2, and the inkjet head H3 are provided on the head carriage in the order from the inkjet head that discharges the ink first toward the scanning direction of the head carriage 101 indicated by the arrow X in FIG. 2.
In addition, the inkjet recording apparatus 100 includes a guide section 102 for moving the head carriage 101 in the scanning direction. The scanning direction of the head carriage 101 is preferably a direction orthogonal to the conveyance direction (arrow Y) of the recording medium P, that is, the width direction of the recording medium P.
In the inkjet recording apparatus 100, the inkjet head H1 corresponds to the first inkjet application section, the inkjet head H2 corresponds to the second inkjet application section, and the inkjet head H3 corresponds to the third inkjet application section.
Note that although not illustrated, the inkjet recording apparatus 100 preferably includes a dryer that dries the area to which the third ink has been applied after the application of the third ink.
Furthermore, as an apparatus other than the inkjet recording apparatus illustrated in FIGS. 1 and 2, a flatbed type printer may be used for application of the first to third ink.
In the flat bed type printer, the base material is fixed, the inkjet head can be moved in a main scanning direction and a sub-scanning direction intersecting the main scanning direction, and printing can be performed without conveyance of the base material.
Since a metal substrate such as a tin plate cannot be roll-to-roll conveyed unlike a resin film substrate, it is preferable to use a flat bed type printer which does not need conveyance of the base material.
As such flat-bed type printer, a printer shown in FIG. 1 of Japanese Unexamined Patent Publication No. 2015-74161 and a printer shown in FIG. 1 of Japanese Unexamined Patent Publication No. 2017-177578 can be exemplified.

Example

Hereinafter, the present invention will be specifically described with reference to the Example, but the present invention is not limited thereto. Note that the operations in the following examples were performed at room temperature (25°C) unless otherwise specified. Further, unless otherwise specified, "%" and "parts" mean "% by mass" and "parts by mass", respectively.

[Preparation of White Pigment Dispersion Liquid WA for Second Ink]

| | |
|---|---|
| White pigment (CR-50-2; manufactured by Ishihara Sangyo Kaisya, Ltd.) | 30% by mass |
| Pigment dispersant: "Joncryl 819" (anionic polymer dispersing agent, acrylic dispersing agent having a carboxy group neutralized with dimethylaminoethanol, acid number: 75 [mgKOH/g], solids content: 20% by mass, manufactured by Basf SE). | 8% by mass |
| Solvent: propylene glycol (PG) | 20% by mass |
| Antifungal agent: 1,2-benzisothiazolin-3-one (Proxel GXL (S)) | 0.1% by mass |

Ion-exchanged water (remainder; amount such that total amount becomes 100% by mass)

The mixture to which the above-described materials were added was premixed. Thereafter, 0.3 mm zirconia beads were dispersed using a bead mill filled with 50% by volume to prepare a white pigment dispersion liquid WA having a pigment content of 20% by mass.

[Preparation of White Pigment Dispersion Liquid WB for Second Ink]

White pigment dispersion liquid WB was prepared in the same manner as in the preparation of the pigment dispersion liquid WA for the second ink except that the amount of "Joncryl 819" used as the pigment dispersant was changed to 10% by mass.

[Preparation of Magenta Pigment Dispersion Liquid for Third Ink]

| | |
|---|---|
| Magenta pigment (mixed crystal of pigment red 122 and pigment violet 19) | 20% by mass |
| Pigment Dispersant: "Joncryl 819" (anionic polymer dispersing agent, acrylic dispersing agent having a carboxy group neutralized with dimethylaminoethanol, acid number: 75 [mgKOH/g], solids content: 20% by mass, manufactured by Basf SE). | 8% by mass |
| Solvent: propylene glycol (PG) | 20% by mass |
| Antifungal agent: 1,2-benzisothiazolin-3-one (Proxel GXL (S); manufactured by Daiwa Dyestuff Mfg. Co., Ltd.) | 0.1% by mass |

Ion-exchanged water (remainder; amount such that total amount becomes 100% by mass)

The mixture to which the above-described materials were added was premixed. Thereafter, the resulting product was dispersed using a bead mill filled with 50% by volume fraction of 0.3 mm zirconia beads to prepare a magenta pigment dispersion liquid having a pigment content of 20% by mass.

[Preparation of First Ink [A1]]

| | |
|---|---|
| Aggregating agent: malonic acid (organic acid) | 3.00% by mass |
| Solvent: dipropylene glycol (DPG) | 15.00% by mass |
| Solvent: 2-methyl-1, 3-propanediol | 15.00% by mass |
| Surfactant: "BYK3450" (silicone type; manufactured by BYK) | 1.00 % by mass |
| Antifungal agent: 1,2-benzisothiazolin-3-one (Proxel GXL (S); manufactured by Daiwa Dyestuff Mfg. Co., Ltd.) | 0.10% by mass |

Ion-exchanged water was added to the above materials while stirring such that the total amount of the ink became 100% by mass. Next, the resultant mixed solution was filtered through 1-μm filter to obtain a first ink [A1].

[Preparation of First Ink [A2] and [A3]

The first ink [A2] and [A3] were prepared in the same manner as in the preparation of the first ink [A1] except that the aggregating agent was changed to the aggregating agent (calcium acetate or magnesium acetate) shown in the following table.

[Preparation of Second Ink [B1]]

| | |
|---|---|
| White pigment dispersion liquid WA | 15.00% by mass |
| Resin particle dispersion liquid: Vylonal MD2000 (polyester) | 7. 50% by mass |
| Solvent: propylene glycol (PG) | 6.40% by mass |
| Solvent: diethylene glycol monobutyl ether (DEGBE) | 0.60% by mass |
| Solvent: 2-methyl-1,3-propanediol | 2.00% by mass |
| Surfactant 1: acetylene glycol-based surfactant OLFINE E1010 (manufactured by Nissin Chemical Industry Co., Ltd) | 0.50% by mass |
| Surfactant 2: silicone-modified surfactant TEGOWet250 (manufactured by Evonik Operations GmbH) | 0.05% by mass |
| Antifungal agent: 1,2-benzisothiazolin-3-one (Proxel GXL (S)) | 0.10% by mass . |

Ion-exchanged water was added to the above materials while stirring such that the total amount of the ink became 100% by mass. Next, the resultant mixed liquid was filtered through a 1-μm filter to prepare a second ink [B1].

[Preparation of Second Ink [B2], [B4], [B5], and [B12] to [B16]

The second inks [B2], [B4], [B5], and [B12] to [B16] were prepared in the same manner as the second ink [B1], except that the resin particle dispersion liquid was changed to each of the resin particle dispersion liquid indicated in the following table. The resin particle dispersion liquid used are as follows.

Note that the average particle diameter of the resin particles in each resin particle dispersion liquid is as illustrated in the following table. The average particle diameter was measured with "Zetasizer Nano S-90" (manufactured by Malvern Panalytical Ltd.).

Furthermore, in the following tables, "% by mass" described in the column of "pigment dispersion liquid" is the content of the pigment dispersion liquid in the second ink.

<Resin Particle Dispersion Liquid>

KA-3556S (polyester resin; Unitika Ltd.)
HA-560 (polyurethane resin; Nicca Chemical Co., Ltd)
GX-1250 (polyester resin; GOO CHEMICAL CO., LTD)
MP-101E (polyolefin resin; Seiko PMC Corporation)
KA-5071S (polyester resin; Unitika Ltd.)
KT-0507 (polyester; Unitika Ltd.)
SF-860 (urethane resin; DKS Co., Ltd)
Mowinyl 6800 (polyacrylic resin; Japan Coating Resin Co., Ltd)

[Preparation of Second Ink [B3]

The second ink [B3] was prepared in the same manner as in the preparation of the second ink [B2] except that the white pigment dispersion liquid WB was used instead of the white pigment dispersion liquid WA.

[Preparation of Second Ink [B6]]

The second ink [B6] was prepared in the same manner as in the preparation of the second ink [B2] except that the

solvent amount was changed as follows.

| | |
|---|---|
| Solvent: propylene glycol (PG) | 7.11% by mass |
| Solvent: diethylene glycol monobutyl ether (DEGBE) | 0.67% by mass |
| Solvent: 2-methyl-1,3-propanediol | 2.22% by mass |

[Preparation of Second Ink [B7]

The second ink [B7] was prepared in the same manner as in the preparation of the second ink [B2] except that the solvent amount was changed as follows.

| | |
|---|---|
| Solvent: propylene glycol (PG) | 24.89% by mass |
| Solvent: diethylene glycol monobutyl ether (DEGBE) | 2.33% by mass |
| Solvent: 2-methyl-1,3-propanediol | 7.78% by mass |

[Preparation of Second Ink [B8]]

The second ink [B8] was prepared in the same manner as in the preparation of the second ink [B2] except that the solvent amount was changed as follows.

| | |
|---|---|
| Solvent: propylene glycol (PG) | 26.31% by mass |
| | 2.47 % by mass |
| Solvent: 2-methyl-1, 3-propanediol | 8.22% by mass |

[Preparation of Second Ink [B9] to [B11]]

The second inks [B9] to [B11] were prepared in the same manner as in the preparation of the second ink [B2] except that the surfactant 1 or 2 was changed to the respective surfactant listed in the following table.

Note that the surfactant 1 and surfactant 2 used in the second inks [B9] to [B11] were in the same amounts as the surfactant 1 and surfactant 2 used in the preparation of the second ink [B2].

<Surfactant>

KF-351A (Shin -Etsu Chemical Co., Ltd)
BYK307 (BYK Corporation)
TEGOWET270 (manufactured by Evonik Operations GmbH)

[Preparation of Second Ink [B17] to [B19]]

In the preparation of the second ink [B2], the white pigment dispersion liquid WB was used instead of the white pigment dispersion liquid WA. In addition, the resin particle dispersion liquid was changed to the respective resin particle dispersion liquid shown in the following table. Furthermore, the second inks [B17] and [B18] were prepared in the same manner except that the surfactant 1 or the surfactant 2 was changed to the respective surfactant listed in the following table. In the second ink [B19], the solvent amount was further changed as shown in the following table. That is, the composition of the solvent amount of the second ink [B19] is the same as that of the second ink [B6].

[Preparation of Third Ink [C1]]

| | |
|---|---|
| Magenta pigment dispersion liquid for the third ink | 5.00% by mass |
| Resin-fine-particle dispersion liquid: Vylonal MD2000 (polyester) | 8.50% by mass |

(continued)

| | |
|---|---|
| Solvent: propylene glycol (PG) | 15.00% by mass |
| Solvent: diethylene glycol monobutyl ether (DEGBE) | 1.80% by mass |
| Solvents: 1,2 -pentanediol | 10.00% by mass |
| Surfactant: "TEGOWet250" (polyether-modified silicone manufactured by Evonik Operations GmbH) | 1.00% by mass |
| Antifungal agent; 1,2-benzisothiazolin-3-one (Proxel GXL (S)) | 0.10% by mass |

Ion-exchanged water was added to the above materials while stirring such that the total amount of the ink became 100% by mass. The obtained mixed liquid was filtered through the 1-μm filter to prepare a third ink [C1].

[Static Surface Tension of Water-Soluble Solvent Including Surfactant]

The static surface tension of the water-soluble solvent containing the surfactant was calculated as follows.

First, solutions [D1] and [D9] to [D11] for selection of surfactants to be used in the second ink were prepared according to the following compositions.

<Preparation of Solution [D1] for Selecting Surfactants to be Used in Second Ink>

| | |
|---|---|
| Solvent: propylene glycol (PG) | 70.40% by mass |
| Solvent: diethylene glycol monobutyl ether (DEGBE) | 6.60 % by mass |
| Solvent: 2-methyl-1,3-propanediol | 22.00% by mass |
| Surfactant 1: Surfactant OLFINE E1010 (manufactured by Nissin Chemical Industry Co., Ltd) | 0.50% by mass |
| Surfactant 2: surfactant TEGOWet250 (manufactured by Evonik Operations GmbH) | 0.5% by mass |

<Preparation of Solution [D9] for Selecting Surfactants to be Used in Second Ink>

Preparation was performed in the same manner as the solution [D1] except for the following surfactant 2.

Surfactant 2: Surfactant KF-351A (manufactured by Shin-Etsu Chemical Co., Ltd.) 0.5% by mass

<Preparation of Solution [D10] for Selecting Surfactants to be Used in Second Ink>

Preparation was performed in the same manner as the solution [D1] except for the following surfactant 2.

Surfactant 2: Surfactant BYK 307 (manufactured by BYK) 0.5% by mass

<Preparation of Solution [D11] for Selecting Surfactants to be Used in Second Ink >

The solution [D1] was prepared in the same manner except for the following surfactant 2.

Surfactant 2: Surfactant TEGOWet270 (manufactured by Evonik Operations GmbH) 0.5% by mass

Next, the solutions [D1] and [D9] to [D11] prepared above were measured with a static surface tensiometer (CBVP-Z: manufactured by Kyowa Interface Science Co., Ltd) using the Wilhelmy method and the static surface tension at 25°C was measured.

Note that the solution [D1] corresponds to the second ink [B1] to [B8] and [B12] to [B16]. The solution [D9] corresponds to the second ink [B9] and [B17] to [B19]. The solution [D10] corresponds to the second ink [B10]. The solution [D11] corresponds to the second ink [B11].

[Evaluation]

<Gelation>

The first ink and the second ink were combined as illustrated in the following table, and the first ink and the second ink were added to a 2 mL microtube in a mass ratio of 1:4 in the order of the first ink and the second ink. After the first ink and the second ink were sufficiently mixed, the above was left to stand for 5 minutes. After being left to stand, the microphone tube was turned upside down, and what did not fall down was evaluated as gelation.

(Standard)

A: The ink does not fall when the microtube is turned upside down
B: The ink drops when the microtube is turned upside down

<Jelly Strength>

The first ink and the second ink were combined as indicated in the following table, and the first ink and the second ink were added in a mass ratio of 1:4 to a 6 cc screw tube in the order of the first ink and the second ink, followed by stirring for 10 minutes. After the stirring, a load required for an intrusion distance of 4 mm at an intrusion rate of 0.5 mm per second was defined as jelly strength using a rheometer (EZ-Test, manufactured by Shimadzu Corporation) equipped with a spherical plunger having a diameter of 7 mm.

<Production of Color Image Prints>

The base material used was PET:FE-2001 (Futamura Chemical Co., Ltd).
As illustrated in FIG. 2, two independently driven inkjet heads (600dpi, ejection amount 4pL) manufactured by Konica Minolta, Inc. were provided next to each other such that the nozzles were staggered with each other, to create a head module capable of printing a 1200dpi × 1200dpi image by the single-pass method. Three of such head modules were prepared and provided side by side along a conveyance direction of a conveyance stage that performs conveyance of the recording medium. Each head module was installed so as to intersect the conveyance direction (the axis of movement of the conveyance stage). A head H1 to be recorded first was filled with the first ink, a head H2 to be recorded later was filled with the second ink, and a head H3 to be recorded further later and subsequent heads were filled with the third ink [C1].
The combination of the first and second ink filled in the head H1 and head H2 are as illustrated in the following table.
The attached amount of the first ink applied per unit area ($g/m^2$) of the recording medium in one pass of the recording medium in each of the example and comparative example is as indicated in the table below. In all of the examples and comparative examples, printing was performed such that the attached amount of the second ink per unit area of the recording medium was 17 $g/m^2$. In all of the examples and comparative examples, printing was performed such that the attached amount of the third ink per unit area of the recording medium was 6 $g/m^2$.
The recording medium was placed on the conveyance stage and conveyance was performed at a speed of 300 mm/sec under an environment of 25°C and 50% RH, and the image was printed by the single-pass method when the recording medium passed under the head. The image in which a character having a size of 6 points was disposed as a hollow character on the solid image using the third ink was printed as the image.
After printing by the inkjet method, the recording medium was placed on a hot plate and dried at 80°C for 5 minutes.

<Color Image Quality>

Each of the printed matters obtained above was observed with a microscope and also observed visually. For the microscopic observation, a digital microscope VHX-1000 manufactured by Keyence Corporation was used. Then, the quality of the color image was evaluated according to the following standard. The ranks "AAA", "AA", and "A" were determined to have no practical problem.

(Standard)

AAA: In the microscopic observation, dots around the hollow character do not protrude to the hollow character

part, and in the visual observation, a clear hollow character image can be visually recognized.

AA: In the microscopic observation, the dots around the hollow character slightly protrude to the hollow character part, but the hollow character clearly remains and in the visual observation, a clear hollow character image can be visually recognized.

A: In the microscopic observation, the dots around the hollow character protrude to the hollow character part, and although the hollow character part remains, in the visual observation, a hollow outline character image character part becomes slightly thinner.

B: In the microscopic observation, the dots around the hollow character protrude to the hollow character part, and in the visual observation, the hollow character image character part is filled and cannot be visually recognized.

<Preparation of Prints of White Solid Image>

As illustrated in FIG. 2, two independently driven inkjet heads (600dpi, ejection amount 4pL) manufactured by Konica Minolta, Inc. were provided next to each other such that the nozzles were staggered with each other, to create a head module capable of printing a 1200dpi $\times$ 1200dpi image by the single-pass method. Two of such head modules were prepared and provided side by side along a conveyance direction of a conveyance stage that performs conveyance of the recording medium. Each head module was installed so as to intersect the conveyance direction (the axis of movement of the conveyance stage). The head H1 to be recorded earlier was filled with the first ink, and the head H2 to be recorded later was filled with the second ink.

The combination of the first and second ink filled in the head H1 and head H2 are as illustrated in the following table.

The attached amount of the first ink applied per unit area (g/m$^2$) of the recording medium in one pass of the recording medium in each of the example and comparative example is as indicated in the table below. In all of the examples and comparative examples, printing was performed such that the attached amount of the second ink per unit area of the recording medium was 17 g/m$^2$.

The recording medium was placed on the conveyance stage and conveyance was performed at a speed of 300 mm/sec under an environment of 25°C and 50% RH, and the image was printed by the single-pass method when the recording medium passed under the head. The solid image using the second ink was printed as the image.

After printing by the inkjet method, the recording medium was placed on the hot plate and dried at 80°C for 5 minutes.

<Solid White Image Quality>

Each of the prints of the white solid image obtained above was visually observed. Then, the quality of the white solid image was evaluated according to the following standard. The ranks "AAA", "AA", and "A" were determined to have no practical problem.

(Standard)

AAA: Neither density unevenness nor cracking is observed in the image.

AA: Although density unevenness is observed in a part of the image, no cracking is observed.

A: Although density unevenness or cracking is observed in a part of the image, neither density unevenness nor cracking is observed from a position 30 cm away.

B: Density unevenness or cracking is noticeable in the entire image.

< Ejection Property >

The white solid image having a print coverage of 100% was printed under an environment of 25°C and 50% RH. The image quality of a writing started part due to ejection failure of each nozzle was visually observed and evaluated according to the following standard. The ranks "AAA", "AA", and "A" were determined to have no practical problem.

(Standard)

AAA: In the writing started part of the image, no blurring is observed.

AA: In the writing started part of the image, occurrence of the blurring is very slightly recognized.

A: In the writing started part of the image, the occurrence of the blurring was observed, but at a level at which there was no practical problem.

[Table 1]

TABLE I

| | | EXAMPLE 1 | EXAMPLE 2 | EXAMPLE 3 | EXAMPLE 4 |
|---|---|---|---|---|---|
| INK SET No. | | 1 | 2 | 3 | 4 |
| FIRST INK | No. | A1 | A1 | A1 | A1 |
| | AGGREGATING AGENT | MALONIC ACID | MALONIC ACID | MALONIC ACID | MALONIC ACID |
| | ATTACHED AMOUNT [$g/m^2$] | 1.0 | 1.0 | 1.0 | 1.0 |
| SECOND INK | No. | B2 | B3 | B4 | B5 |
| | PIGMENT DISPERSION LIQUID | WHITE PIGMENT DISPERSION LIQUID WA (PARTICLE DIAMETER 230 nm) 15% BY MASS | WHITE PIGMENT DISPERSION LIQUID WB (PARTICLE DIAMETER 230 nm) 15% BY MASS | WHITE PIGMENT DISPERSION LIQUID WA (PARTICLE DIAMETER 230 nm) 15% BY MASS | WHITE PIGMENT DISPERSION LIQUID WA (PARTICLE DIAMETER 230 nm) 15% BY MASS |
| | RESIN | KA-3556S | KA-3556S | HA-560 | GX-1250 |
| | AVERAGE PARTICLE DIAMETER OF RESIN PARTICLES [nm] | 65 | 65 | 35 | 80 |
| | SOLVENT AMOUNT [% BY MASS] | 9 | 9 | 9 | 9 |
| | SURFACTANT 1 | E1010 | E1010 | E1010 | E1010 |
| | SURFACTANT 2 | TEGOwet250 | TEGOwet250 | TEGOwet250 | TEGOwet250 |
| | SURFACE TENSION OF WATER-SOLUBLE SOLVENT CONTAINING SURFACTANT [mN/m] | 36 | 36 | 36 | 36 |
| GEL EVALUATION | GELLING | A | A | A | A |
| | JELLY STRENGTH [mN] | 2.8 | 3.0 | 20.0 | 25.0 |
| CHARACTERISTIC EVALUATION | COLOR IMAGE QUALITY | AA | AA | AA | AA |
| | WHITE SOLID IMAGE QUALITY | AA | AAA | AAA | AA |
| | EJECTION PROPERTY | AA | AA | AA | AA |

[Table 2]

TABLE II

| | | EXAMPLE 5 | EXAMPLE 6 | EXAMPLE 7 | EXAMPLE 8 |
|---|---|---|---|---|---|
| INK SET No. | | 5 | 6 | 7 | B |
| FIRST INK | No. | A2 | A2 | A3 | A3 |
| | AGGREGATING AGENT | CALCIUM ACETATE | CALCIUM ACETATE | MAGNESIUM ACETATE | MAGNESIUM ACETATE |
| | ATTACHED AMOUNT [$g/m^2$] | 1.0 | 1.0 | 1.0 | 1.0 |
| SECOND INK | No. | B2 | B3 | B2 | B3 |
| | PIGMENT DISPERSION LIQUID | WHITE PIGMENT DISPERSION LIQUID WA (PARTICLE DIAMETER 230 nm) 15% BY MASS | WHITE PIGMENT DISPERSION LIQUID WB (PARTICLE DIAMETER 230 nm) 15% BY MASS | WHITE PIGMENT DISPERSION LIQUID WA (PARTICLE DIAMETER 230 nm) 15% BY MASS | WHITE PIGMENT DISPERSION LIQUID WB (PARTICLE DIAMETER 230 nm) 15% BY MASS |
| | RESIN | KA-3556S | KA-3556S | KA-3556S | KA-3556S |
| | AVERAGE PARTICLE DIAMETER OF RESIN PARTICLES [nm] | 65 | 65 | 65 | 65 |
| | SOLVENT AMOUNT [% BY MASS] | 9 | 9 | 9 | 9 |
| | SURFACTANT 1 | E1010 | E1010 | E1010 | E1010 |
| | SURFACTANT 2 | TEGOwet250 | TEGOwet250 | TEGOwet250 | TEGOwet250 |
| | SURFACE TENSION OF WATER-SOLUBLE SOLVENT CONTAINING SURFACTANT [mN/m] | 36 | 36 | 36 | 36 |
| GEL EVALUATION | GELLING | A | A | A | A |
| | JELLY STRENGTH [mN] | 2.8 | 3.0 | 2.8 | 3.0 |
| CHARACTERISTIC EVALUATION | COLOR IMAGE QUALITY | AAA | AAA | AAA | AAA |
| | WHITE SOLID IMAGE QUALITY | AAA | AAA | AAA | AAA |
| | EJECTION PROPERTY | AA | AA | AA | AA |

[Table 3]

TABLE III

| | | EXAMPLE 9 | EXAMPLE 10 | EXAMPLE 11 | EXAMPLE 12 |
|---|---|---|---|---|---|
| INK SET No. | | 9 | 10 | 11 | 12 |
| FIRST INK | No. | A1 | A1 | A1 | A1 |
| | AGGREGATING AGENT | MALONIC ACID | MALONIC ACID | MALONIC ACID | MALONIC ACID |
| | ATTACHED AMOUNT [g/m$^2$] | 1.0 | 1.0 | 1.0 | 1.0 |
| SECOND INK | No. | B6 | B7 | B8 | B9 |
| | PIGMENT DISPERSION LIQUID | WHITE PIGMENT DISPERSION LIQUID WA (PARTICLE DIAMETER 230 nm) 15% BY MASS | WHITE PIGMENT DISPERSION LIQUID WA (PARTICLE DIAMETER 230 nm) 15% BY MASS | WHITE PIGMENT DISPERSION . LIQUID WA (PARTICLE DIAMETER 230 nm) 15% BY MASS | WHITE PIGMENT DISPERSION LIQUID WA (PARTICLE DIAMETER 230 nm) 15% BY MASS |
| | RESIN | KA-3556S | KA-3556S | KA-3556S | KA-3556S |
| | AVERAGE PARTICLE DIAMETER OF RESIN PARTICLES [nm] | 65 | 65 | 65 | 65 |
| | SOLVENT AMOUNT [% BY MASS] | 10 | 35 | 37 | 9 |
| | SURFACTANT 1 | E1010 | E1010 | E1010 | KF-351A |
| | SURFACTANT 2 | TEGOwet250 | TEGOwet250 | TEGOwet250 | TEGOwet250 |
| | SURFACE TENSION OF WATER-SOLUBLE SOLVENT CONTAINING SURFACTANT [mN/m] | 36 | 36 | 36 | 25 |
| GEL EVALUATION | GELLING | A | A | A | A |
| | JELLY STRENGTH [mN] | 2.8 | 2.8 | 2.8 | 2.8 |
| CHARACTERISTIC EVALUATION | COLOR IMAGE QUALITY | AA | AA | AA | AA |
| | WHITE SOLID IMAGE QUALITY | AA | AA | A | AAA |
| | EJECTION PROPERTY | AAA | AAA | AAA | AA |

[Table 4]

TABLE IV

| | | EXAMPLE 13 | EXAMPLE 14 | EXAMPLE 15 | EXAMPLE 16 |
|---|---|---|---|---|---|
| INK SET No. | | 13 | 14 | 15 | 16 |
| FIRST INK | No. | A1 | A1 | A1 | A1 |
| | AGGREGATING AGENT | MALONIC ACID | MALONIC ACID | MALONIC ACID | MALONIC ACID |
| | ATTACHED AMOUNT [$g/m^2$] | 1.0 | 1.0 | 1.0 | 1.0 |
| SECOND INK | No. | B10 | B11 | B12 | B13 |
| | PIGMENT DISPERSION LIQUID | WHITE PIGMENT DISPERSION LIQUID WA (PARTICLE DIAMETER 230 nm) 15% BY MASS | WHITE PIGMENT DISPERSION LIQUID WA (PARTICLE DIAMETER 230 nm) 15% BY MASS | WHITE PIGMENT DISPERSION LIQUID WA (PARTICLE DIAMETER 230 nm) 15% BY MASS | WHITE PIGMENT DISPERSION LIQUID WA (PARTICLE DIAMETER 230 nm) 15% BY MASS |
| | RESIN | KA-3556S | KA-3556S | MP-101E | KA-5071S |
| | AVERAGE PARTICLE DIAMETER OF RESIN PARTICLES [nm] | 65 | 65 | 81 | 150 |
| | SOLVENT AMOUNT [% BY MASS] | 9 | 9 | 9 | 9 |
| | SURFACTANT 1 | E1010 | E1010 | E1010 | E1010 |
| | SURFACTANT 2 | BYK307 | TEGOWET270 | TEGOwet250 | TEGOwet250 |
| | SURFACE TENSION OF WATER-SOLUBLE SOLVENT CONTAINING SURFACTANT [mN/m] | 22 | 23 | 36 | 36 |
| GEL EVALUATION | GELLING | A | A | A | A |
| | JELLY STRENGTH [mN] | 2.8 | 2.8 | 2.8 | 2.9 |
| CHARACTERISTIC EVALUATION | COLOR IMAGE QUALITY | AA | AA | AA | AA |
| | WHITE SOLID IMAGE QUALITY | AAA | AAA | AAA | AAA |
| | EJECTION PROPERTY | AA | AA | AA | AA |

[Table 5]

TABLE V

| | | EXAMPLE 17 | EXAMPLE 18 | EXAMPLE 19 | EXAMPLE 20 |
|---|---|---|---|---|---|
| INK SET No. | | 17 | 18 | 19 | 20 |
| FIRST INK | No. | A1 | A1 | A1 | A1 |
| | AGGREGATING AGENT | MALONIC ACID | MALONIC ACID | MALONIC ACID | MALONIC ACID |
| | ATTACHED AMOUNT [g/m$^2$] | 1.0 | 1.0 | 1.1 | 3.4 |
| SECOND INK | No. | B14 | B15 | B2 | B2 |
| | PIGMENT DISPERSION LIQUID | WHITE PIGMENT DISPERSION LIQUID WA (PARTICLE DIAMETER 230 nm) 15% BY MASS | WHITE PIGMENT DISPERSION LIQUID WA (PARTICLE DIAMETER 230 nm) 15% BY MASS | WHITE PIGMENT DISPERSION LIQUID WA (PARTICLE DIAMETER 230 nm) 15% BY MASS | WHITE PIGMENT DISPERSION LIQUID WA (PARTICLE DIAMETER 230 nm) 15% BY MASS |
| | RESIN | KT-0507 | SF-860 | KA-3556S | KA-3556S |
| | AVERAGE PARTICLE DIAMETER OF RESIN PARTICLES [nm] | 198 | 210 | 65 | 65 |
| | SOLVENT AMOUNT [% BY MASS] | 9 | 9 | 9 | 9 |
| | SURFACTANT 1 | E1010 | E1010 | E1010 | E1010 |
| | SURFACTANT 2 | TEGOwet250 | TEGOwet250 | TEGOwet250 | TEGOwet250 |
| | SURFACE TENSION OF WATER-SOLUBLE SOLVENT CONTAINING SURFACTANT [mN/m] | 36 | 36 | 36 | 36 |
| GEL EVALUATION . | GELLING | A | A | A | A |
| | JELLY STRENGTH [mN1 | 2.7 | 2.5 | 2.8 | 2.8 |
| CHARACTERISTIC EVALUATION | COLOR IMAGE QUALITY | AA | AA | AAA | AAA |
| | WHITE SOLID IMAGE QUALITY | AAA | AAA | AAA | AAA |
| | EJECTION PROPERTY | AA | A | AA | AA |

[Table 6]

TABLE VI

| | | EXAMPLE 21 | EXAMPLE 22 | EXAMPLE 23 | EXAMPLE 24 |
|---|---|---|---|---|---|
| INK SET No. | | 21 | 22 | 23 | 24 |
| FIRST INK | No. | A1 | A2 | A2 | A2 |
| | AGGREGATING AGENT | MALONIC ACID | CALCIUM ACETATE | CALCIUM ACETATE | CALCIUM ACETATE |
| | ATTACHED AMOUNT [g/m$^2$] | 3.8 | 1.0 | 1.1 | 1.1 |
| SECOND INK | No. | B2 | B17 | B17 | B18 |
| | PIGMENT DISPERSION LIQUID | WHITE PIGMENT DISPERSION LIQUID WA (PARTICLE DIAMETER 230 nm) 15% BY MASS | WHITE PIGMENT DISPERSION LIQUID WB (PARTICLE DIAMETER 230 nm) 15% BY MASS | WHITE PIGMENT DISPERSION LIQUID WB (PARTICLE DIAMETER 230 nm) 15% BY MASS | WHITE PIGMENT DISPERSION LIQUID WB (PARTICLE DIAMETER 230 nm) 15% BY MASS |
| | RESIN | KA-3556S | KA-3556S | KA-3556S | KA-5071 S |
| | AVERAGE PARTICLE DIAMETER OF RESIN PARTICLES [nm] | 65 | 65 | 65 | 150 |
| | SOLVENT AMOUNT [% BY MASS] | 9 | 9 | 9 | 9 |
| | SURFACTANT 1 | E1010 | KF-351A | KF-351A | KF-351A |
| | SURFACTANT 2 | TEGOwet250 | TEGOwet250 | TEGOwet250 | TEGOwet250 |
| | SURFACE TENSION OF WATER-SOLUBLE SOLVENT CONTAINING SURFACTANT [mN/m] | 36 | 25 | 25 | 25 |
| GEL EVALUATION | GELLING | A | A | A | A |
| | JELLY STRENGTH [mN] | 2.8 | 3.0 | 3.0 | 3.5 |
| CHARACTERISTIC EVALUATION | COLOR IMAGE QUALITY | AA | AAA | AAA | AAA |
| | WHITE SOLID IMAGE QUALITY | AA | AAA | AAA | AAA |
| | EJECTION PROPERTY | AA | AA | AA | AA |

[Table 7]

TABLE VII

| | | EXAMPLE 25 | COMPARATIVE EXAMPLE 1 | COMPARATIVE EXAMPLE 2 |
|---|---|---|---|---|
| INK SET No. | | 25 | 26 | 27 |
| FIRST INK | No. | A2 | A1 | A1 |
| | AGGREGATING AGENT | CALCIUM ACETATE | MALONIC ACID | MALONIC ACID |
| | ATTACHED AMOUNT [g/m$^2$] | 1.1 | 1.0 | 1.0 |
| SECOND INK | No. | B19 | B1 | B16 |
| | PIGMENT DISPERSION LIQUID | WHITE PIGMENT DISPERSION LIQUID WB (PARTICLE DIAMETER 230 nm) 15% BY MASS | WHITE PIGMENT DISPERSION LIQUID WA (PARTICLE DIAMETER 230 nm) 15% BY MASS | WHITE PIGMENT DISPERSION LIQUID WA (PARTICLE DIAMETER 230 nm) 15% BY MASS |
| | RESIN | KA-5071S | MD2000 | MOWINYL 6800 |
| | AVERAGE PARTICLE DIAMETER OF RESIN PARTICLES [nm] | 150 | 135 | 92 |
| | SOLVENT AMOUNT [% BY MASS] | 10 | 9 | 9 |
| | SURFACTANT 1 | KF-351A | E1010 | E1010 |
| | SURFACTANT 2 | TEGOwet250 | TEGOwet250 | TEGOwet250 |
| | SURFACE TENSION OF WATER-SOLUBLE SOLVENT CONTAINING SURFACTANT [mN/m] | 25 | 36 | 36 |
| GEL EVALUATION | GELLING | A | B | B |
| | JELLY STRENGTH [mN] | 3.5 | 2.0 | 1.4 |
| CHARACTERISTIC EVALUATION | COLOR IMAGE QUALITY | AAA | B | B |
| | WHITE SOLID IMAGE QUALITY | AAA | AA | AA |
| | EJECTION PROPERTY | AAA | AA | AA |

As illustrated in the above results, it is recognized that the ink sets of the present invention are excellent in color image quality, white solid image quality, and ejection property as compared with the ink sets of the comparative example.

Industrial Applicability

The present invention can be used in an ink set, an inkjet recording method, and an inkjet recording system in which the sinking of the color ink into the underlayer is suppressed and a drying step is not provided between the step of printing the white ink and the step of printing the color ink.

Reference Signs List

1, 100 inkjet recording apparatus
10 first ink application section
11, 21, 24, h1, h2, h3 inkjet head
12 first ink
20 second ink application section
22 second ink
30 third ink application section
25 third ink
26 dryer
40 feed roller
50 winding roller
101 head carriage
102 guide section
P base material (recording medium)
F coating film of first ink that is composite coating film
X scanning direction
Y conveyance direction

## Claims

**1.** An ink set comprising:

a first ink containing an aggregating agent;
a second ink containing a white pigment and a resin emulsion; and
a third ink containing a color pigment,
wherein the second ink is gelled by being mixed with the first ink.

**2.** The ink set according to claim 1, wherein the first ink and the second ink are mixed at a mass ratio of 1:4, and a jelly strength at 25°C is within a range of 3.0 to 20.0 mN.

**3.** The ink set according to claim 1, wherein the aggregating agent is a polyvalent metal salt.

**4.** The ink set according to claim 1, wherein,

the second ink contains a water-soluble solvent, and
a percentage of the water-soluble solvent is within a range of 10 to 35% by mass when a total mass of the second ink is 100% by mass.

**5.** The ink set according to claim 1, wherein,

the second ink contains a water-soluble solvent and a surfactant, and
a static surface tension of the water-soluble solvent including the surfactant is 25 mN/m or less at 25°C.

**6.** The ink set according to claim 1, wherein an average particle diameter of a particle in the resin emulsion is in a range of 80 to 200 nm.

**7.** An inkjet recording method comprising:

a first step in which a first ink is applied to a recording medium;
a second step in which a second ink is applied; and
a third step in which a third ink is applied,
wherein,
an image is formed by applying and coalescing the first to third ink on a surface of the recording medium through the first to third steps,
drying is not performed between the first step and the second step, and between the second step and the third step, and
the second ink and the first ink gels when mixed together.

**8.** The inkjet recording method according to claim 7, wherein an attached amount of the first ink for each unit area on the recording medium is within a range of 1.1 $g/m^2$ to 3.4 $g/m^2$.

**9.** An inkjet recording system comprising:

the ink set according to any one of claims 1 to 6;
a first application means for applying a first ink to a recording medium;
a second application means for applying a second ink; and
a third application means for applying a third ink,
wherein,
an image is formed by applying and coalescing the first to third ink on a surface of the recording medium by the first to third application means,
drying is not performed between the first application means and the second application means, and between the second application means and the third application means, and
the second ink and the first ink gels when mixed together.

FIG.1

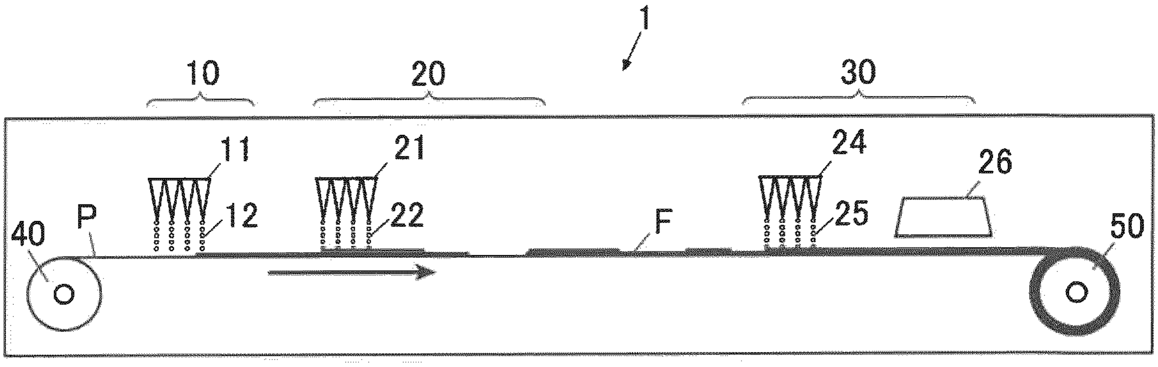


FIG.2

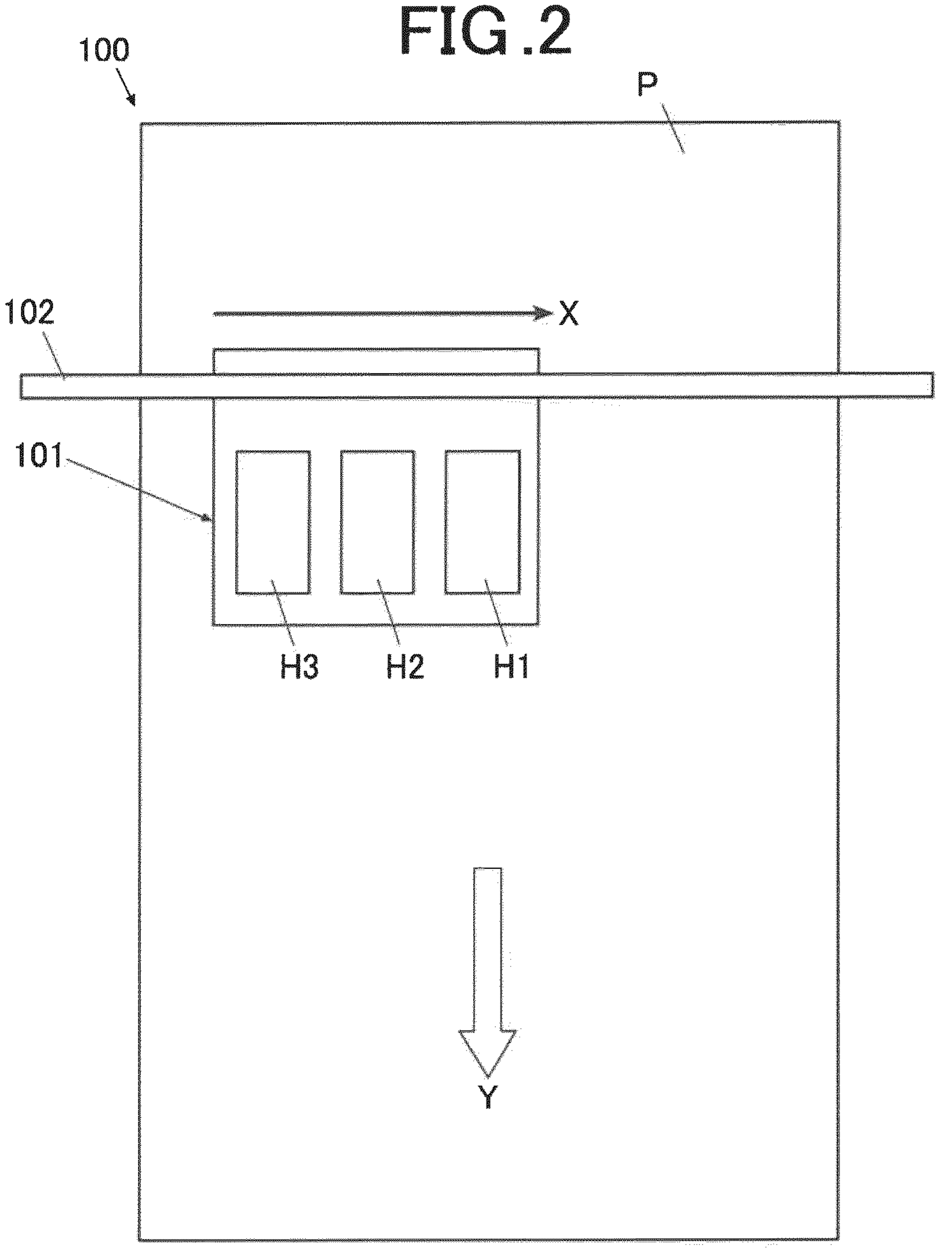

## INTERNATIONAL SEARCH REPORT

International application No.
**PCT/JP2024/009259**

### A. CLASSIFICATION OF SUBJECT MATTER

***C09D 11/322***(2014.01)i; ***B41J 2/01***(2006.01)i; ***B41J 2/21***(2006.01)i; ***B41M 5/00***(2006.01)i; ***C09D 11/38***(2014.01)i; ***C09D 11/40***(2014.01)i; ***C09D 11/54***(2014.01)i
FI: C09D11/322; C09D11/54; C09D11/38; C09D11/40; B41M5/00 120; B41M5/00 132; B41J2/01 501; B41J2/21

According to International Patent Classification (IPC) or to both national classification and IPC

### B. FIELDS SEARCHED

Minimum documentation searched (classification system followed by classification symbols)

C09D11/322; B41J2/01; B41J2/21; B41M5/00; C09D11/38; C09D11/40; C09D11/54

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2019-42982 A (SEIKO EPSON CORPORATION) 22 March 2019 (2019-03-22) claim 1, examples, paragraphs [0087], [0125], [0138]-[0146], [0155], [0162], [0181], [0197] | 1-9 |
| X | JP 2016-124213 A (SEIKO EPSON CORPORATION) 11 July 2016 (2016-07-11) claims 1, 10, table 1, paragraphs [0022], [0050]-[0054], [0081], [0089], [0093], [0104], [0105] | 1-9 |
| X | JP 2009-508717 A (E.I. DU PONT DE NEMOURS AND COMPANY) 05 March 2009 (2009-03-05) claims 1, 7, table 1, paragraphs [0030], [0116] | 1-9 |
| X | JP 2023-5600 A (RISO KAGAKU CORP.) 18 January 2023 (2023-01-18) claims 1, 3, tables 1-2, paragraphs [0017], [0158] | 1-4, 6-7, 9 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 May 2024** | **21 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/009259**

| Patent document cited in search report | Publication date (day/month/year) | Patent family member(s) | Publication date (day/month/year) |
| --- | --- | --- | --- |
| JP 2019-42982 A | 22 March 2019 | US 2019/0061382 A1<br>claim 1, examples, paragraphs [0091], [0130], [0140]-[0152], [0161], [0168], [0192], [0207]<br>CN 109421368 A | |
| JP 2016-124213 A | 11 July 2016 | US 2016/0194824 A1<br>claim 1, 10, table 1, paragraphs [0033], [0061]-[0065], [0092], [0100], [0104], [0114], [0115] | |
| JP 2009-508717 A | 05 March 2009 | US 2007/0056118 A1<br>claim 1, 7, table 1, paragraphs [0023], [0081]<br>WO 2007/035508 A1<br>EP 1924737 A1 | |
| JP 2023-5600 A | 18 January 2023 | US 2022/0411999 A1<br>claim 1, 3, table 1, paragraphs [0019], [0240]-[0241]<br>CN 115538197 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H852867 A
- JP 2010158884 A
- JP 2022104220 A
- JP 2022101991 A
- JP 2022049649 A
- JP 2022040645 A
- JP S5774193 A
- JP S5787988 A
- JP S62261476 A
- JP S5774192 A
- JP S5787989 A
- JP S6072785 A
- JP S61146591 A
- JP H0195091 A
- JP H0313376A A
- JP 59042993 A
- JP S5952689 A
- JP S62280069 A
- JP S61242871 A
- JP H04219266 A
- JP 2015074161 A
- JP 2017177578 A